(19) Europäisches Patentamt
European Patent Office
Office européen des brevets

(11) EP 3 838 936 A1

(12) EUROPEAN PATENT APPLICATION

(43) Date of publication:
23.06.2021 Bulletin 2021/25

(21) Application number: 19306704.8

(22) Date of filing: 19.12.2019

(51) Int Cl.:
*C08F 279/06* (2006.01) *C08F 285/00* (2006.01)
*C08L 33/04* (2006.01) *C04B 26/06* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **ARKEMA FRANCE**
**92700 Colombes (FR)**

(72) Inventors:
- **MARASINGHE, Liza**
  **60550 VERNEUIL EN HALATTE (FR)**
- **GAUDRE, Caroline**
  **60550 VERNEUIL EN HALATTE (FR)**

(74) Representative: **Arkema Patent**
**Arkema France**
**DRD-DPI**
**420, rue d'Estienne d'Orves**
**92705 Colombes Cedex (FR)**

(54) **CURABLE COMPOSITIONS COMPRISING MULTISTAGE POLYMERS**

(57) The present invention relates to curable compositions which comprise (meth)acrylic monomers, ethylenically unsaturated oligomers and a specific multistage polymer additive. The additive is used as a processing aid to reduce cure shrinkage and prevent the formation of cracks during the polymerization of the composition.

EP 3 838 936 A1

## Description

### FIELD OF THE INVENTION

The present invention relates to curable compositions which comprise (meth)acrylic monomers, ethylenically unsaturated oligomers and a specific multistage polymer additive. The additive is used as a processing aid to reduce cure shrinkage and prevent the formation of cracks during the polymerization of the composition.

### BACKGROUND OF THE INVENTION

Radical polymerization is a standard technique to quickly obtain hardened 3-dimensional thermoset polymer networks from ethylenically unsaturated compounds such as (meth)acrylates. During polymerization, the (meth)acrylic resin goes from liquid to solid state. The viscosity of the (meth)acrylic resin increases until it becomes rigid. At one point, referred to as the gel point, the plastic deformation is no longer able to compensate the stress due to the change of density and volume reduction of the material. This phenomenon, also referred to as cure shrinkage, can lead to the formation of cracks during polymerization, especially when a relatively thick layer of material is polymerized in a mold and/or when the material comprises a high amount of monomers/reactive diluents, fillers and/or reinforcing fibers. The resulting polymer is therefore brittle and exhibits a loss of interface adherence, for example at the mold's surface and/or around the fillers or reinforcing fibers.

Artificial marbles and artificial stones in the form of slabs or block generally consist of a mineral filler dispersed in a polymeric matrix. A polyester or styrenic resin is generally used as the polymeric matrix. Unfortunately, when a polyester resin is used, the resulting product shows poor aging resistance, especially in outdoor conditions because it is sensitive to ultraviolet radiation.

(Meth)acrylic resins represent an interesting alternative to polyester resins since they exhibit excellent aging resistance. However, (meth)acrylate based artificial marbles and artificial stones are particularly prone to cure shrinkage and formation of cracks during polymerization due to thickness of the slabs or blocks and the high concentration of mineral fillers.

It would therefore be desirable to find an additive that reduces cure shrinkage and prevents the formation of cracks during the polymerization of (meth)acrylic resins. The resulting resin would therefore have excellent mechanical properties (Tg, Young modulus, hardness) and could be used in a variety of applications, in particular to obtain thick molded articles and/or articles containing high loads of fillers or reinforcing fibers, such as artificial marbles, artificial stones, sealants, adhesives and composites.

The inventors have found that a specific additive based on the combination of a multistage polymer and a thermoplastic polymer that is compatible with (meth)acrylates is able to absorb and dissipate part of the energy released during polymerization of (meth)acrylic resins and hence reduce cure shrinkage and the prevent the formation of cracks.

### SUMMARY OF THE INVENTION

A first subject of the present invention is a curable composition comprising:

i) a composition (P1) comprising:

- a monomer (M1) comprising at least 2, preferably 2 to 4, more preferably 2 or 3, (meth)acrylate groups, the monomer (M1) having a weight average molecular weight (Mw) of 100 to 420 g/mol, in particular 200 to 350 g/mol;
- an oligomer (O1) comprising at least 2 ethylenic unsaturations, preferably 2 to 10 ethylenic unsaturations, the oligomer (O1) having a weight average molecular weight (Mw) of 421 to 10 000 g/mol, in particular 450 to 3 000 g/mol;
- an additive (AD) comprising:

    a) a multistage polymer (MP1) comprising

        a1) one stage (SA1) comprising a polymer (A1) having a glass transition temperature of less than 10°C; and
        a2) one stage (SA2) comprising a polymer (A2) having a glass transition temperature of at least 60°C; and

    b) a thermoplastic polymer (B1) having a glass transition temperature of at least 30°C; and

ii) a composition (P2) comprising a radical initiator.

The present invention also relates to a process comprising the polymerization of the curable composition according to the invention.

Another subject of the present invention is an article obtained by polymerization of the curable composition according to the invention. In particular, the article may be a molded article, a composite, an adhesive, a chemical anchoring system, a sealant, a dental filler or an electrical insulation coating, more particularly an artificial marble or an artificial stone.

Yet another subject of the present invention is the use of the curable composition according to the invention, for the preparation of a molded article, a composite, an adhesive, a chemical anchoring system, a sealant, a dental filler or an electrical insulation coating. In particular, the curable composition may be used to prepare an artificial marble or an artificial stone.

The invention is also directed to the use of an additive in a curable composition to reduce cure shrinkage and prevent the formation of cracks during the polymerization of the composition, the additive being an additive (AD) comprising:

a) a multistage polymer (MP1) comprising

a1) one stage (SA1) comprising a polymer (A1) having a glass transition temperature of less than 10°C; and
a2) one stage (SA2) comprising a polymer (A2) having a glass transition temperature of at least 60°C; and

b) a thermoplastic polymer (B1) having a glass transition temperature of at least 30°C

## DETAILED DESCRIPTION

## COMPOSITION

The curable composition of the invention comprises a composition (P1) and a composition (P2). It may further optionally comprise a composition (P3) and/or a composition (P4).

### Composition (P1)

Composition (P1) comprises a monomer (M1), an oligomer (O1) and an additive (AD). In one embodiment, composition (P1) consists essentially of a monomer (M1), an oligomer (O1), an additive (AD) and optionally an activator.

Monomer (M1) and oligomer (O1) represent the major part of composition (P1). In one embodiment, the total weight of monomer (M1) and oligomer (O1) represents 87 to 99%, in particular 90 to 98.5%, more particularly 92 to 97.5%, even more particularly 94 to 96.5% of the weight of composition (P1).

Monomer (M1) and oligomer (O1) comprise polymerizable carbon-carbon double bonds. As used herein, the term "polymerizable carbon-carbon double bond" is a carbon-carbon double bond that can react with another carbon-carbon double bond in a polymerization reaction. A polymerizable carbon-carbon double bond is generally comprised in a (meth)acrylate group or a vinyl group ($-CH=CH_2$). As used herein, the term "(meth)acrylate group" encompasses acrylate groups ($-O-CO-CH=CH_2$) and methacrylate groups ($-O-CO-C(CH_3)=CH_2$). The carbon-carbon double bonds of a phenyl ring are not considered as polymerizable carbon-carbon double bonds.

In one embodiment, the weight ratio between oligomer (O1) and monomer (M1) may be from 20/80 to 80/20, in particular 25/75 to 75/25, more particularly 30/70 to 70/30. Increasing the amount of monomer (M1) in composition (P1) may result in the introduction of short chains and an increase of the polymerizable carbon-carbon double bond content. The density of the network is therefore increased and the resulting composition is more prone to internal stress and cure shrinkage.

In a preferred embodiment, the weight ratio between oligomer (O1) and monomer (M1) may be from 20/80 to 50/50, in particular 25/75 to 45/65, more particularly 30/70 to 40/60.

The weight ratio between oligomer (O1) and monomer (M1) may be adjusted so that the resulting mixture has a sufficient concentration of polymerizable carbon-carbon double bond. For example, the mixture of monomer (M1) and oligomer (O1) may have a polymerizable carbon-carbon double bond content ($\%C{=}C_{mixture}$) of 5 to 30%, in particular 10 to 20%, more particularly 12 to 17%, by weight based on the weight of monomer (M1) and oligomer (O1).

The $\%C{=}C_{mixture}$ may be determined with the following equation:

$$\%C{=}C_{mixture} = (w_{oligomer} \times \%C{=}C_{oligomer}) + (w_{monomer} \times \%C{=}C_{monomer})$$

wherein

$w_{oligomer}$ is the % by weight of oligomer (O1) based on the total weight of monomer (M1) and oligomer (O1);
$\%C{=}C_{oligomer}$ is the polymerizable carbon-carbon double bond content of the oligomer (O1) as defined below in the oligomer (O1) section;
$w_{monomer}$ is the % by weight of monomer (M1) based on the total weight of monomer (M1) and oligomer (O1); and
$\%C{=}C_{monomer}$ is the polymerizable carbon-carbon double bond content of the monomer (M1) as defined below in the monomer (M1) section.

Additive (AD) may advantageously be used as a processing aid to reduce cure shrinkage and prevent the formation of cracks during polymerization of the composition. The amount of additive (AD) is advantageously kept low to avoid increasing the viscosity of composition (P1) and altering the mechanical performances of the polymerized product. In particular, the amount of additive (AD) in composition (P1) may be 1 to 15%, in particular 2 to 10%, more particularly 3 to 8%, even more particularly 4 to 6% based on the total weight of monomer (M1) and oligomer (O1).
Composition (P1) advantageously exhibits a viscosity at 25°C of 200 to 1000 mPa.s, in particular 300 to 900 mPa.s, more particularly 400 to 800 mPa.s.
In a specific embodiment, composition (P1) comprises:

- 15 to 80%, in particular 20 to 75%, more particularly 25 to 70%, of monomer (M1);
- 15 to 80%, in particular 20 to 75%, more particularly 25 to 70%, of oligomer (O1); and
- 1 to 13%, in particular 1.5 to 10%, more particularly 2.5 to 8%, even more particularly 3.5 to 6%, of additive (AD);

the % being % by weight based on the weight of composition (P1).

<u>Monomer (M1)</u>

Composition (P1) comprises a monomer (M1). Composition (P1) may comprise a mixture of monomers (M1).
Monomer (M1) bears at least 2, preferably 2 to 4, more preferably 2 or 3, (meth)acrylate groups.
In one embodiment, monomer (M1) comprises at least 2, preferably 2 to 4, more preferably 2 or 3, methacrylate groups.
Preferably, monomer (M1) is selected so as to have a medium concentration of (meth)acrylate groups. For example, monomer (M1) may have a polymerizable carbon-carbon double bond content ($\%C{=}C_{monomer}$) of 10 to 25%, in particular 12 to 22%, more particularly 14 to 20%, by weight based on the weight of monomer (M1).
The $\%C{=}C_{monomer}$ may be determined according to the following formula:

$$\%C{=}C_{monomer} = \frac{f_{monomer} \times 24}{Mw_{monomer}} \times 100$$

wherein

$f_{monomer}$ is the number of (meth)acrylate groups of monomer (M1); and
$Mw_{monomer}$ is the weight average molecular weight of monomer (M1).

Monomer (M1) has a weight average molecular weight (Mw) of 100 to 420 g/mol, in particular 200 to 400 g/mol, more particularly 230 to 350 g/mol.
Monomer (M1) may exhibit a dynamic viscosity at 23°C of 3 to 400 mPa.s, in particular 4 to 150 mPa.s, more particularly 5 to 50 mPa.s, even more particularly 6 to 20 mPa.s.
Monomer (M1) may exhibit a Tg -10 to 100°C, in particular 10 to 90°C, more particularly 20 to 80°C.
The monomer (M1) may be selected from (meth)acrylated polyols (polyalcohols) and (meth)acrylated alkoxylated polyols. Methacrylated polyols and methacrylated alkoxylated polyols are particularly preferred. The polyols may be aliphatic, cycloaliphatic (including one or more cycloaliphatic rings) or may contain one or more aromatic rings (as in the case of phenol or bisphenol A). "Alkoxylated" means that the base polyol has been reacted with one or more epoxides such as ethylene oxide and/or propylene oxide so as to introduce one or more ether moieties (e.g., $-CH_2CH_2-O-$) on the hydroxyl groups of the polyol, prior to esterification to introduce one or more (meth)acrylate functional groups. For example, the amount of epoxide reacted with the polyol may be from about 1 to about 30 moles of epoxide per mole of polyol. Examples of suitable polyols include organic compounds containing two, three, four or more hydroxyl groups per molecule such as glycols (diols), e.g., ethylene glycol, polyethylene glycol, 1,2- or 1,3-propylene glycol, or 1,2-, 1,3-

or 1,4-butylene glycol, neopentyl glycol, trimethylolpropane, triethylolpropane, pentaerythritol, glycerol and the like.

Monomer (M1) may, in particular, be selected from (meth)acrylate esters of aliphatic polyols, (meth)acrylate esters of alkoxylated aliphatic polyols, (meth)acrylate esters of aromatic ring-containing alcohols and (meth)acrylate esters of alkoxylated aromatic ring-containing alcohols. Methacrylate esters of aliphatic polyols, methacrylate esters of alkoxylated aliphatic polyols, methacrylate esters of aromatic ring-containing alcohols and methacrylate esters of alkoxylated aromatic ring-containing alcohols are particularly preferred.

In one embodiment, monomer (M1) may be represented by the following formula:

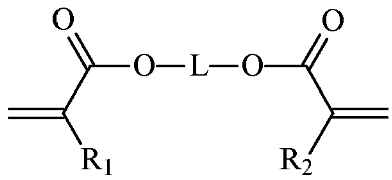

wherein

$R_1$ and $R_2$ are independently H or methyl, preferably $R_1$ and $R_2$ are methyl;
L is a divalent radical selected from alkylene or polyoxyalkylene;
in particular L is a divalent radical selected from $-(CR_3R_4)_a-$, $-[(CR_5R_6)_b-O]_c-$ and $-[(CR_7R_8)_d-O]_e-(CR_9R_{10})_f-[O-(CR_{11}R_{12})_g]_h$
$R_3$, $R_4$, $R_5$, $R_6$, $R_7$, $R_8$, $R_9$, $R_{10}$, $R_{11}$ and $R_{12}$ are independently H or methyl; a is 2 to 10;
b, d, f and g are independently 2 to 6;
c, e and h are independently 1 to 10 ;
more particularly L is a divalent radical selected from ethylene, 1,3-propylene, 1,4-butylene, 1,3-butylene, 1,5-pentamethylene, 1,6-hexamethylene, a residue of di-, tri- or tetraethylene glycol, a residue of di-, tri- or tetrapropylene glycol, a residue of di-, tri- or tetrabutylene glycol, and mixtures thereof.

In another embodiment, monomer (M1) may be represented by the following formula:

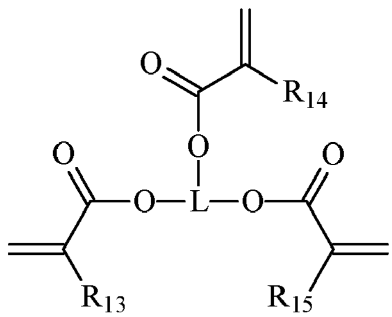

wherein

$R_{13}$, $R_{14}$ and $R_{15}$ are independently H or methyl, preferably $R_{13}$, $R_{14}$ and $R_{15}$ are methyl;
L is a trivalent radical selected from alkylene or polyoxyalkylene.

In particular, L may be a trivalent radical represented by the following formula:

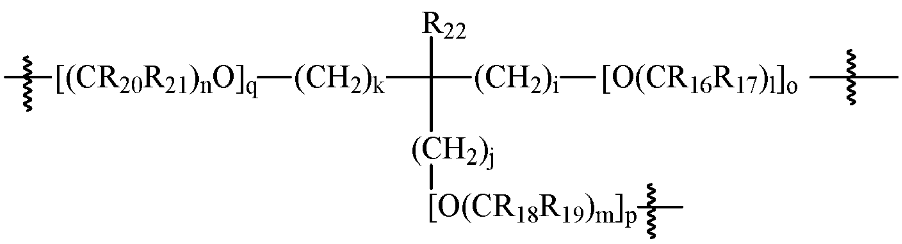

wherein

$R_{16}$, $R_{17}$, $R_{18}$, $R_{19}$, $R_{20}$ and $R_{21}$ are independently H or methyl;
$R_{22}$ is selected from H, OH, alkyl, alkoxy and alkyl substituted with a hydroxy group;
i, j and k are independently 0 to 2, with the proviso that at least 2 among i, j and k are not 0;
l, m and n are independently 2 to 6;
o, p and q are independently 0 to 4.

Representative, but not limiting, examples of suitable monomers (M1) include ethylene glycol di(meth)acrylate, 1,2-propanediol di(meth)acrylate, 1,3-propanediol di(meth)acrylate, 1,4-butanediol di(meth)acrylate, 1,3-butanediol di(meth)acrylate, 1,5-pentanediol di(meth)acrylate, 1,6-hexanediol di(meth)acrylate, 1,10-decanediol di(meth)acrylate, 1,12-dodecanediol di(meth)acrylate, diethylene glycol di(meth)acrylate, triethylene glycol di(meth)acrylate, tetraethylene glycol di(meth)acrylate, dipropylene glycol di(meth)acrylate, tripropylene glycol di(meth)acrylate, tetrapropylene glycol di(meth)acrylate, neopentyl glycol di(meth)acrylate, cyclohexane dimethanol di(meth)acrylate, bisphenol A di(meth)acrylate, hydrogenated bisphenol A di(meth)acrylate, tricyclodecane dimethanol di(meth)acrylate, trimethylolpropane tri(meth)acrylate, triethylolpropane tri(meth)acrylate, glycerol tri(meth)acrylate, pentaerythritol tetra(meth)acrylate, and the alkoxylated (e.g., ethoxylated, propoxylated) derivatives thereof. The methacrylated derivatives of the above compounds are particularly preferred.
Preferably, monomer (M1) is selected from ethylene glycol dimethacrylate, diethylene glycol dimethacrylate, triethylene glycol dimethacrylate, tetraethylene glycol dimethacrylate, 1,4-butanediol dimethacrylate and 1,6-hexanediol dimethacrylate; even more preferably monomer (M1) is tetraethylene glycol dimethacrylate.
Composition (P1) may comprise 15 to 80%, in particular 20 to 75%, more particularly 25 to 70%, by weight of monomer (M1) based on the weight of composition (P1).

Oligomer (O1)

Composition (P1) comprises an oligomer (O1). Composition (P1) may comprise a mixture of oligomers (O1).
Oligomer (O1) bears at least 2 ethylenic unsaturations, preferably 2 to 10 ethylenic unsaturations. As used herein, the term "ethylenic unsaturations" means polymerizable carbon-carbon double bonds.
In a preferred embodiment, oligomer (O1) bears at least 2, preferably 2 to 10, (meth)acrylate groups. Advantageously, oligomer (O1) bears at least 2, preferably 2 to 10, methacrylate groups.
Oligomer (O1) has a weight average molecular weight (Mw) of 421 to 10 000 g/mol, in particular 450 to 3 000 g/mol.
Oligomer (O1) may exhibit a Tg of 50 to 200°C, in particular 80 to 150°C, more particularly 90 to 130°C.
Preferably, oligomer (O1) is selected so as to have a sufficient concentration of ethylenic unsaturations. For example, oligomer (O1) may have a polymerizable carbon-carbon double bond content ($\%C{=}C_{oligomer}$) of 5 to 15%, in particular 6 to 12%, more particularly 7 to 11%, by weight based on the weight of oligomer (O1).
The $\%C{=}C_{oligomer}$ may be determined according to the following formula:

$$\%\mathrm{C{=}C}_{oligomer} = \frac{f_{\ oligomer} \times 24}{Mw_{oligomer}} \times 100$$

wherein

$f_{oligomer}$ is the number of polymerizable carbon-carbon double bonds of oligomer (O1); and
$Mw_{oligomer}$ is the weight average molecular weight of oligomer (O1) in g/mol.

In one embodiment, oligomer (O1) may be selected from epoxy (meth)acrylates, urethane (meth)acrylates, polyester (meth)acrylates, polyether (meth)acrylates, (meth)acrylated poly(meth)acrylates, unsaturated polyesters, polybutadienes, vinyl ethers, including the amine-modified and sulfide-modified derivatives of the aforementioned oligomers, and mixtures thereof.
In a preferred embodiment, oligomer (O1) is selected from epoxy (meth)acrylates, urethane (meth)acrylates, polyester (meth)acrylates, polyether (meth)acrylates, and mixtures thereof. Advantageously, oligomer (O1) is selected from epoxy methacrylates, urethane methacrylates, polyester methacrylates, polyether methacrylates, and mixtures thereof.
Examples of suitable epoxy (meth)acrylates include the reaction products of acrylic or methacrylic acid or mixtures thereof with an epoxy resin (polyglycidyl ether or ester). The epoxy resin may, in particular, by selected from

bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolak resin, hydrogenated bisphenol A diglycidyl ether, hydrogenated bisphenol F diglycidyl ether, hydrogenated bisphenol S diglycidyl ether, 3,4-epoxycyclohexylmethyl-3',4'-epoxycyclohexanecarboxylate, 2-(3,4-epoxycyclohexyl-5,5-spiro-3,4-epoxy)cyclohexane-1,4-dioxane, bis(3,4-epoxycyclohexylmethyl)adipate, vinylcyclohexene oxide, 4-vinylepoxycyclohexane, bis(3,4-epoxy-6-methylcyclohexylmethyl)adipate,3,4-epoxy-6-methylcyclohexy 1-3',4'-epoxy-6'-methylcyclohexanecarboxylate, methylenebis(3,4-epoxycyclohexane), dicyclopentadiene diepoxide, di(3,4-epoxycyclohexylmethyl) ether of ethylene glycol, ethylenebis(3, 4-epoxycyclohexanecarboxylate), 1,4-butanediol diglycidyl ether, 1,6-hexanediol diglycidyl ether, glycerol triglycidyl ether, trimethylolpropane triglycidyl ether, polyethylene glycol diglycidyl ether, polypropylene glycol diglycidyl ether, polyglycidyl ethers of a polyether polyol obtained by the addition of one or more alkylene oxides to an aliphatic polyhydric alcohol such as ethylene glycol, propylene glycol, and glycerol, diglycidyl esters of aliphatic long-chain dibasic acids, monoglycidyl ethers of aliphatic higher alcohols, monoglycidyl ethers of phenol, cresol, butyl phenol, or polyether alcohols obtained by the addition of alkylene oxide to these compounds, glycidyl esters of higher fatty acids, epoxidized soybean oil, epoxybutylstearic acid, epoxyoctylstearic acid, epoxidized linseed oil, epoxidized polybutadiene, and the like.

Exemplary urethane (meth)acrylates (sometimes also referred to as "polyurethane (meth)acrylates") include urethanes based on aliphatic, cycloaliphatic and/or aromatic polyester polyols, polyether polyols and polycarbonate polyols and aliphatic, cycloaliphatic and/or aromatic polyester diisocyanates and polyether diisocyanates capped with (meth)acrylate end-groups. In various embodiments, the urethane (meth)acrylates may be prepared by reacting an aliphatic, cycloaliphatic and/or aromatic polyisocyanate (e.g., diisocyanate, triisocyanate) with a OH group terminated polyester polyol, polyether polyol, polycarbonate polyol, polycaprolactone polyol, polydimethysiloxane polyol, or polybutadiene polyol, or combinations thereof to form an isocyanate-functionalized oligomer which is then reacted with a hydroxyl-functionalized (meth)acrylate such as hydroxyethyl (meth)acrylate or hydroxypropyl (meth)acrylate to provide terminal (meth)acrylate groups. For example, the urethane (meth)acrylates may contain two, three, four or more (meth)acrylate functional groups per molecule. Other orders of addition may also be practiced to prepare the polyurethane (meth)acrylate, as is known in the art. For example, the hydroxyl-functionalized (meth)acrylate may be first reacted with a polyisocyanate to obtain an isocyanate-functionalized (meth)acrylate, which may then be reacted with an OH group terminated polyester polyol, polyether polyol, polycarbonate polyol, polycaprolactone polyol, polydimethysiloxane polyol, polybutadiene polyol, or a combination thereof. In yet another embodiment, a polyisocyanate may be first reacted with a polyol, including any of the aforementioned types of polyols, to obtain an isocyanate-functionalized polyol, which is thereafter reacted with a hydroxyl-functionalized (meth)acrylate to yield a polyurethane (meth)acrylate. Alternatively, all the components may be combined and reacted at the same time.

Exemplary polyester (meth)acrylates include the reaction products of acrylic or methacrylic acid or mixtures thereof with a hydroxyl group-terminated polyester polyol. The reaction process may be conducted such that a significant concentration of residual hydroxyl groups remain in the polyester (meth)acrylate or may be conducted such that all or essentially all of the hydroxyl groups of the polyester polyol have been (meth)acrylated. The polyester polyols can be made by polycondensation reactions of a polyhydroxyl functional component (in particular a diol) and a polycarboxylic acid functional compound (in particular, a dicarboxylic acid or anhydride). To prepare the polyester (meth)acrylates, the hydroxyl groups of the polyester polyol are then partially or fully esterified by reacting with (meth)acrylic acid, (meth)acryloyl chloride, (meth)acrylic anhydride or the like. Polyester (meth)acrylates may also be synthesized by reacting a hydroxyl-containing (meth)acrylate such as a hydroxyalkyl (meth)acrylate (e.g., hydroxyethyl acrylate) with a polycarboxylic acid. The polyhydroxyl functional and polycarboxylic acid functional components can each have linear, branched, cycloaliphatic or aromatic structures and can be used individually or as mixtures.

Exemplary polyether (meth)acrylates include, but are not limited to, the condensation reaction products of acrylic or methacrylic acid or mixtures thereof with a polyetherol which is a polyether polyol. Suitable polyetherols can be linear or branched substances containing ether bonds and terminal hydroxyl groups. Polyetherols can be prepared by ring opening polymerization of epoxides and other oxygen-containing heterocyclic compounds (e.g., ethylene oxide, 1,2-propylene oxide, butene oxide, tetrahydrofuran and combinations thereof) with a starter molecule. Suitable starter molecules include water, hydroxyl functional materials, polyester polyols and amines. Polyetherols may also be obtained by the condensation of diols such as glycols.

Any of the above-mentioned types of oligomers may be modified with an amine or sulfide (e.g., thiol), following procedures known in the art. Such amine- and sulfide-modified oligomers may be prepared, for example, by reacting a relatively small portion (e.g., 2-15%) of the (meth)acrylate functional groups present in the base oligomer with an amine (e.g., a secondary amine) or a sulfide (e.g., a thiol), wherein the modifying compound adds to the carbon-carbon double bond of the (meth)acrylate in a Michael addition reaction.

Composition (P1) may comprise 15 to 80%, in particular 20 to 75%, more particularly 25 to 70%, by weight of oligomer (O1) based on the weight of composition (P1).

Additive (AD)

Composition (P1) comprises an additive (AD).

Additive (AD) comprises:

a) a multistage polymer (MP1) comprising

  a1) one stage (SA1) comprising a polymer (A1) having a glass transition temperature of less than 10°C; and
  a2) one stage (SA2) comprising a polymer (A2) having a glass transition temperature of at least 60°C; and

b) a thermoplastic polymer (B1) having a glass transition temperature of at least 30°C.

Composition (P1) may comprise 1 to 13%, in particular 1.5 to 10%, more particularly 2.5 to 8%, even more particularly 3.5 to 6%, by weight of additive (AD) based on the weight of composition (P1).

The multistage polymer (MP1) may be in form of polymeric particles, in particular in the form of spherical particles. The multistage polymer (MP1) may be referred to as particles, in particular core/shell particles or multistage particles.

The particles may have a weight average particle size (diameter) between 15 nm and 900 nm. In particular, the weight average particle size of the particles may be between 20 nm and 800 nm, more particularly between 25 nm and 600 nm, even more particularly between 30 nm and 550 nm, more particularly still between 35 nm and 500 nm or between 40 nm and 400 nm or between 75 nm and 350 nm or between 80 nm and 300 nm.

In one embodiment, the core/shell particles may be agglomerated in the form of a polymer powder comprising a plurality of core/shell particles.

The multistage polymer (MP1) of the additive (AD) has at least two stages (SA1) and (SA2). Stages (SA1) and (SA2) have different polymer compositions.

Stage (SA1) may be referred to as the first stage and stage (SA2) may be referred to as the second stage. The terms "first stage" and "second stage" refer to the order of formation of the stages. Accordingly, the first stage is formed before the second stage. The use of the term "first stage" does not exclude the presence of an additional stage formed before the first stage. The use of the term "second stage" does not exclude the presence of an intermediate stage formed between the first stage and the second stage.

The multistage polymer (MP1) may be obtained by a multistage process such as a process comprising two, three or more stages.

Stage (SA1) may form the core of the particles. Stage (SA2) may form a shell around stage (SA1) of the particles. Optionally, the particles may comprise an additional stage, which may form an intermediate layer between stage (SA1) and the stage (SA2). Optionally, the particles may comprise an additional stage, which may from a shell around stage (SA2) of the particles. Optionally, the particles may comprise an additional stage before stage (SA1), so that stage (SA1) would also be a kind of shell, for example on a seed.

Preferably, stage (SA1) comprising polymer (A1) is the first stage of the at least two stages and stage (SA2) comprising polymer (A2) is grafted on stage (SA1) comprising polymer (A1) or on another optional intermediate layer.

In particular, polymer (A1) having a glass transition temperature below 10°C in stage (SA1) is not in the external layer of the multistage polymer. Accordingly, polymer (A1) is not made in the last stage of the multistage process. The polymer (A1) having a glass transition temperature below 10°C in stage (A1) is either in the core of the multistage particle or one of the inner layers. Preferably, stage (SA1) is the most inner layer of the multistage polymer (MP1). In other words, stage (SA1) comprising the polymer (A1) may be the core of the multistage polymer (MP1).

In a first preferred embodiment, stage (SA2) comprising polymer (A2) is the external layer of the multistage polymer. In this embodiment, the thermoplastic polymer (B1) is not part of the multistage polymer.

In a second preferred embodiment, stage (SA2) comprising polymer (A2) is an intermediate layer of the multistage polymer and the external layer of the multistage polymer is a further stage (SB1) comprising a thermoplastic polymer (B1) having a glass transition temperature over 30°C. According to this embodiment, the multistage polymer (MP1) has a multilayer structure comprising a first stage (SA1) comprising a polymer (A1) having a glass transition temperature below 10°C, a second stage (SA2) comprising a polymer (A2) having a glass transition temperature over 60°C and a third stage (SB1) comprising a thermoplastic polymer (B1) having a glass transition temperature over 30°C. In this embodiment, at least part of component b) of the additive (AD) is combined with component a) of the additive (AD). Accordingly, at least part of component b) may be a further stage of the multistage polymer comprising stage (SA1) and stage (SA2). This embodiment is further explained in the multistage process for preparing multistage polymer (MP1) and additive (AD) section below.

In a preferred embodiment, the multistage polymer (MP1) comprises a plurality of core/shell particles as defined above.

*Polymer (A1)*

Polymer (A1) has a glass transition temperature below 10°C.

In a first embodiment, polymer (A1) may be a (meth)acrylic polymer comprising at least 50 wt%, preferably at least 60 wt%, more preferably at least 70 wt%, even more preferably at least 80 wt%, of polymeric units derived from acrylic monomers based on the weight of polymer (A1).

The acrylic polymeric units in polymer (A1) of the first embodiment may be derived from acrylic monomers chosen from C1 to C18 alkyl acrylates or mixtures thereof. In particular, the acrylic polymeric units in polymer (A1) may be derived from acrylic monomers chosen from C2 to C12 alkyl acrylates or mixtures thereof. More particularly, the acrylic polymeric units in polymer (A1) may be derived from acrylic monomers chosen from C2 to C8 alkyl acrylates or mixtures thereof. Even more particularly, the acrylic polymeric units in polymer (A1) may be derived from acrylic monomers chosen from propyl acrylate, isopropyl acrylate, butyl acrylate, tert-butyl acrylate and mixtures thereof. More particularly still, the acrylic polymeric units in polymer (A1) may be derived from butyl acrylate.

Polymer (A1) of the first embodiment may advantageously comprise at least 70 wt% of polymeric units derived from a C2 to C8 alkyl acrylate based on the weight of polymer (A1).

Polymer (A1) of the first embodiment may further comprise polymeric units derived from a comonomer or comonomers which are copolymerizable with the afore-mentioned acrylic monomer, as long as polymer (A1) has a glass transition temperature of less than 10°C. In particular, polymer (A1) may further comprise polymeric units derived from a comonomer or comonomers chosen from (meth)acrylic monomers and/or vinyl monomers. More particularly, polymer (A1) may further comprise polymeric units derived from a comonomer or comonomers chosen from methyl acrylate, methyl methacrylate, ethyl methacrylate, butyl methacrylate and mixtures thereof, as long as polymer (A1) has a glass transition temperature of less than 10°C.

Polymer (A1) of the first embodiment may advantageously be a homopolymer of butyl acrylate.

The glass transition temperature Tg of polymer (A1) of the first embodiment may be between -100°C and less than 10°C, in particular between -80°C and 0°C, more particularly between -80°C and -20°C, even more particularly between -70°C and -20°C.

In a second embodiment, polymer (A1) may comprises at least 50 wt% of polymeric units derived from isoprene, butadiene and mixtures thereof based on the weight of polymer (A1).

Polymer (A1) of the second embodiment may advantageously be chosen from an isoprene homopolymer, a butadiene homopolymer, an isoprene-butadiene copolymer, a copolymer of isoprene with at most 98 wt% of a vinyl monomer and a copolymer of butadiene with at most 98 wt% of a vinyl monomer. The vinyl monomer may be chosen from styrene, an alkylstyrene, acrylonitrile, an alkyl (meth)acrylate, and mixtures thereof.

Polymer (A1) of the second embodiment may advantageously be a butadiene homopolymer.

The glass transition temperature Tg of polymer (A1) of the second embodiment may be between -100°C and less than 10°C, in particular between -90°C and 0°C, more particularly between -85°C and 0°C, even more particularly between -80°C and -20°C.

In a third embodiment, polymer (A1) may be a silicone rubber based polymer. The silicone rubber based polymer may, for example, be a polydimethyl siloxane.

The glass transition temperature Tg of polymer (A1) of the third embodiment may be between -150°C and 0°C, in particular between -145°C and -5°C, more particularly between -140°C and - 15°C, even more particularly between -135°C and -25°C.

*Polymer (A2)*

Polymer (A2) has a glass transition temperature of at least 60°C.

Polymer (A2) may be a (meth)acrylic polymer comprising at least 50 wt%, preferably at least 60 wt%, more preferably at least 70 wt%, even more preferably at least 80 wt% of polymeric units derived from derived from ethylenically unsaturated monomers, such as (meth)acrylates and/or vinyl monomers, preferably (meth)acrylates, based on the weight of polymer (A2).

The (meth)acrylic polymeric units in polymer (A2) may be derived from (meth)acrylic monomers chosen from a C1 to C12 alkyl (meth)acrylate and mixtures thereof. In particular, the (meth)acrylic polymeric units in polymer (A2) may be derived from (meth)acrylic monomers chosen from a C1 to C4 alkyl methacrylate, a C1 to C8 alkyl acrylate and mixtures thereof. More particularly, the (meth)acrylic polymeric units in polymer (A2) may be derived from (meth)acrylic monomers chosen from methyl acrylate, ethyl acrylate, methyl methacrylate, ethyl methacrylate, butyl methacrylate and mixtures thereof. Even more particularly, the (meth)acrylic polymeric units in polymer (A2) may be derived from methyl methacrylate.

Polymer (A2) may comprise at least 70 wt% of monomeric units derived from a C1 to C12 alkyl (meth)acrylate based on the weight of polymer (A2). More particularly, polymer (A2) may comprise at least 70 wt% of monomeric units

derived from a C1 to C4 alkyl methacrylate and/or a C1 to C8 alkyl acrylate monomers based on the weight of polymer (A2). Even more particularly, polymer (A2) may comprise at least 70wt% of monomeric units derived from methyl methacrylate based on the weight of polymer (A2).

Polymer (A2) may further comprise polymeric units derived from a comonomer or comonomers which are copolymerizable with the afore-mentioned (meth)acrylic monomer, as long as polymer (A2) has a glass transition temperature of at least 60°C. In particular, polymer (A2) may further comprise polymeric units derived from a comonomer or comonomers chosen from vinyl monomers, such as, for example styrene.

The glass transition temperature Tg of polymer (A2) may be between 60°C and 150°C, in particular between 80°C and 150°C, more particularly between 90°C and 150°C, even more particularly between 100°C and 150°C.

In certain embodiments, polymer (A2) is crosslinked. This means that a crosslinker is present with the other monomer or monomers. In one embodiment, the crosslinker is divinyl benzene.

In one embodiment, polymer (A2) comprises a functional comonomer. The functional comonomer may be represented by one of the following formulae (1) and (2):

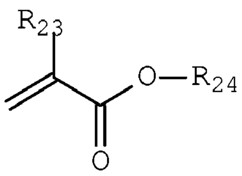

(1)

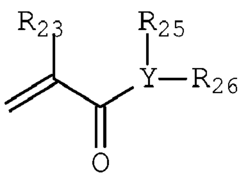

(2)

wherein

- $R_{23}$ is selected from H or $CH_3$;
- $R_{24}$ is H or an aliphatic or aromatic radical having at least one atom that is not C or H;
- $R_{25}$ and $R_{26}$ are independently H or an aliphatic or aromatic radical.

Preferably, the functional monomer of formula (1) or (2) is chosen from glycidyl (meth)acrylate; (meth)acrylic acid; amides derived (meth)acrylic acid, such as, for example, dimethylacrylamide; 2-methoxyethyl (meth)acrylate; 2-aminoethyl (meth)acrylates which may optionally be quaternized; (meth)acrylate monomers comprising a phosphonate or phosphate group; alkyl imidazolidinone (meth)acrylates; polyethylene glycol (meth)acrylates; and mixtures thereof. More particularly, the polyethylene glycol group of the polyethylene glycol (meth)acrylates has a weight average molecular weight ranging from 400 g/mol to 10 000 g/mol

*Thermoplastic polymer (B1)*

The thermoplastic polymer (B1) may be a (meth)acrylic polymer.

The term "thermoplastic polymer" as used herein means a polymer that turns to a liquid or becomes more liquid or less viscous when heated and that can take on new shapes by the application of heat and pressure.

As used herein, the term "(meth)acrylic polymer" means a polymer comprising polymerized units derived from one or more (meth)acrylic monomers wherein the (meth)acrylic monomer(s) make up 50 wt% or more of the (meth)acrylic polymer. The term "(meth)acrylic monomer", as used herein, means any type of polymerizable monomer containing one or more acrylic and/or methacrylic functional groups.

The thermoplastic polymer (B1) may be a homopolymer or a copolymer, wherein "copolymer" refers to a polymer containing polymerized units derived from two or more different monomers. The thermoplastic polymer (B1) is preferably not grafted on any other polymer or polymers, or at least a portion of the thermoplastic polymer is not grafted on any other polymer or polymers.

The thermoplastic polymer (B1) of component (b) of additive (AD) may be the same composition as or different in composition from any polymer which is present as part of the multistage polymer (MP1) of component (a) od additive (AD). Preferably, the thermoplastic polymer (B1) of component (b) is different in composition from any polymer which is present as part of the multistage polymer (MP1) of component (a).

The presence of the thermoplastic polymer (B1) in a curable composition helps to facilitate the dispersion and stabilization of the multistage polymer (MP1), both in the curable composition and a cured article prepared therefrom. In the absence of the thermoplastic polymer (B1), the multistage polymer (MP1), which typically is in the form of particles, may tend to agglomerate and settle out of the curable composition (rendering the curable composition non-homogeneous). Thus, including the thermoplastic polymer (B1) has been found to lead to a homogeneous dispersion of the multistage polymer (MP1) in the curable composition, which facilitates the formation of a homogeneous cured article prepared by curing the curable composition. An ideal homogeneous dispersion of the multistage polymer (MP1) in a matrix has no agglomerates after the multistage polymer (MP1) is combined with a monomer (M1) and an oligomer (O1). Thus, a liquid curable composition comprising a thermoplastic polymer (B1), a multistage polymer (MP1), a monomer (M1) and an oligomer (O1) may exhibit a better dispersion of the multistage polymer (MP1) than an analogous composition not comprising the thermoplastic polymer (B1). Further, a liquid curable composition comprising a thermoplastic polymer (B1), a multistage polymer (MP1), a monomer (M1) and an oligomer (O1) may be less viscous than an analogous composition not comprising the thermoplastic polymer (B1).

The thermoplastic polymer (B1) has a weight average molecular weight Mw of between 10 000 g/mol and 500 000 g/mol.

The thermoplastic polymer (B1) may have a weight average molecular weight Mw of more than 10 000 g/mol, preferably more than 10 500 g/mol, more preferably more than 11 000 g/mol, still more preferably more than 12 000 g/mol, advantageously more than 13 000 g/mol, more advantageously more than 14 000 g/mol and still more advantageously more than 15 000 g/mol.

The thermoplastic polymer (B1) may have a weight average molecular weight Mw below 500 000 g/mol, preferably below 450 000 g/mol, more preferably below 400 000 g/mol, still more preferably below 400 000 g/mol, advantageously below 350 000 g/mol, more advantageously below 300 000 g/mol, still more advantageously below 250 000 g/mol and most advantageously below 200 000 g/mol.

The thermoplastic polymer (B1) may have a weight average molecular weight Mw between 10 500 g/mol and 450 000 g/mol, more preferably between 11 000 g/mol and 400 000 g/mol, even more preferably between 12 000 g/mol and 350 000 g/mol, advantageously between 13 000 g/mol and 300 000 g/mol, more advantageously between 14 000 g/mol and 250 000 g/mol and most advantageously between 15 000 g/mol and 200 000 g/mol.

In a first embodiment, the weight average molecular weight Mw of the thermoplastic polymer (B1) may be between 15 000 g/mol and 300 000 g/mol, more preferably between 15 000 g/mol and 200 000 g/mol, even more preferably between 15 000 g/mol and 190 000 g/mol, advantageously between 15 000 g/mol and 180 000 g/mol, more advantageously between 15 000 g/mol and 160 000 g/mol and most advantageously between 15 000 g/mol and 150 000 g/mol.

In a second embodiment, the weight average molecular weight Mw of the thermoplastic polymer (B1) may be between 15 000 g/mol and 450 000 g/mol, more preferably between 18 000 g/mol and 400 000 g/mol, even more preferably between 20 000 g/mol and 350 000 g/mol, advantageously between 22 000 g/mol and 300 000 g/mol, more advantageously between 25 000 g/mol and 250 000 g/mol and most advantageously between 30 000 g/mol and 200 000 g/mol.

The weight average molecular weight (Mw) of the thermoplastic polymer (B1) may be selected according to the first embodiment or the second embodiment as a function of the acquired viscosity of the curable composition. If the viscosity has to be low or if an additional rheology modifier is present, the second embodiment is preferred. If the viscosity has to be higher or if no additional rheology modifier is present, the first embodiment is preferred.

The glass transition temperature Tg of the thermoplastic polymer (B1) may be between 30°C and 150°C, in particular between 40°C and 150°C, more particularly between 45°C and 150°C, even more particularly between 50°C and 150°C.

Preferably, the thermoplastic polymer (B1) comprises polymeric units derived from (meth)acrylic monomers, in particular derived from C1 to C12 alkyl (meth)acrylate monomers, more particularly derived from C1 to C4 alkyl methacrylate and/or C1 to C8 alkyl acrylate monomers, even more particularly derived from methyl methacrylate, methyl acrylate, ethyl acrylate, butyl acrylate and mixtures thereof.

Still more preferably, the thermoplastic polymer (B1) comprises at least 70 wt% of polymeric units derived from C1 to C12 alkyl (meth)acrylate monomers based on the weight of the thermoplastic polymer (B1). Advantageously, the thermoplastic polymer (B1) comprises at least 80 wt% of polymeric units derived from C1 to C4 alkyl methacrylate and/or C1 to C8 alkyl acrylate monomers based on the weight of the thermoplastic polymer (B1).

In a first preferred embodiment, the thermoplastic polymer (B1) comprises from 80 wt% to 100 wt% of polymeric units derived from methyl methacrylate, preferably the thermoplastic polymer (B1) comprises 80 wt% to 99.9 wt% of polymeric units derived from methyl methacrylate and 0.1 wt% to 20 wt% of polymeric units derived from a C1 to C8 alkyl acrylate monomer, based on the weight of the thermoplastic polymer (B1). Advantageously, the C1 to C8 alkyl acrylate monomer is selected from methyl acrylate, ethyl acrylate and butyl acrylate.

In another embodiment, the thermoplastic polymer (B1) further comprises polymeric units derived from a functional comonomer. The functional comonomer may be represented by one of the formulae (1) and (2) as defined above for polymer (A2). Preferably, the functional monomer of formula (1) or (2) is chosen from glycidyl (meth)acrylate; (meth)acrylic acid; amides derived (meth)acrylic acid, such as, for example, dimethylacrylamide; 2-methoxyethyl (meth)acrylate; 2-aminoethyl (meth)acrylates which may optionally be quaternized; (meth)acrylate monomers comprising a phosphonate or phosphate group; alkyl imidazolidinone (meth)acrylates; polyethylene glycol (meth)acrylates; and mixtures thereof. More particularly, the polyethylene glycol group of the polyethylene glycol (meth)acrylates has a weight average molecular weight ranging from 400 g/mol to 10 000 g/mol

In particular, the thermoplastic polymer (B1) may comprise between 0 wt% and 50 wt% of polymeric units derived from a functional monomer based on the weight of the thermoplastic polymer (B1). Preferably, the thermoplastic polymer (B1) comprises between 0 wt% and 30 wt%, more preferably between 1 wt% and 30 wt%, still more preferably between 2 wt% and 30 wt%, advantageously between 3 wt% and 30 wt%, more advantageously between 5 wt% and 30 wt% and most advantageously between 5 wt% and 30 wt% of polymeric units derived from a functional monomer based on the weight of the thermoplastic polymer (B1).
Preferably, the thermoplastic polymer (B1) is not crosslinked.

*Multistage process for preparing multistage polymer (MP1) and additive (AD)*

The multistage polymer (MP1) may be obtained by a multistage process comprising at least two stages. Components a1) and a2) are part of the multistage polymer (MP1). At least part of component b) may also be part of the multistage polymer (MP1), in particular as an additional stage of the multistage polymer (MP1). Alternatively, component b) may be agglomerated with the multistage polymer (MP1). Alternatively, at least part of the component b) is grafted on the multistage polymer (MP1) and at least a part of the component b) is not grafted on the multistage polymer (MP1).

Preferably the polymer (A1) having a glass transition temperature below 10°C made during the stage (SA1), is made before stage (SA2) or is the first stage of the multistage process.

Preferably the polymer (A2) having a glass transition temperature of at least 60°C made during the stage (SA2) is made after the stage (SA1) of the multistage process.

In a first preferred embodiment the thermoplastic polymer (B1) having a glass transition temperature of at least 30°C is made by a process to give polymeric particles of the thermoplastic polymer (B1). The weight average particle size (diameter) of the thermoplastic polymer (B1) particles may be between 15 nm and 900 nm, preferably between 20 nm and 800 nm, more preferably between, more preferably between 25 nm and 600 nm, even more preferably between 30 nm and 550 nm, more preferably still between 35 nm and 500 nm, advantageously between 40 nm and 400 nm, more advantageously between 75 nm and 350 nm and even more advantageously between 80 nm and 300 nm. The thermoplastic polymer (B1) particles may be agglomerated together with the multistage polymer (MP1) particles giving a polymer powder comprising a plurality of (MP1) particles and a plurality of (B1) particles. In this embodiment, the (MP1) particles and the (B1) particles are distinct from one another. Accordingly, the thermoplastic polymer (B1) is not grafted on the multistage polymer (MP1).

In a second preferred embodiment, the thermoplastic polymer (B1) having a glass transition temperature of at least 30°C is the external layer of the polymer particle having the multilayer structure in other words of the multistage polymer (MP1).

The thermoplastic polymer (B1) having a glass transition temperature over 30°C may be made during a stage (SB1), after stage (SA2) of the multistage process. There could be additional intermediate stages, either between stage (SA1) and stage (SA2) and/or between stage (SA2) and stage (SB1).

At least a part of the thermoplastic polymer (B1) may be grafted on the polymer made in the previous layer. If there are only two stages (SA1) and (SA2) comprising polymer (A1) and (A2) respectively, a part of the thermoplastic polymer (B1) may be grafted on polymer (A2). In one embodiment, at least 50 wt% of the thermoplastic polymer (B1) is grafted on polymer (A2). The ratio of grafting can be determined by extraction with a solvent for the polymer (B1) and gravimetric measurement before and after extraction to determine the non-grafted quantity.

The thermoplastic polymer (B1) and the polymer (A2) are not the same polymer, even if their composition could be very close and some of their characteristics are overlapping. The essential difference is that the polymer (A2) is always part of the multistage polymer (MP1).

The glass transition temperature Tg of the respective polymers can be estimated for example by dynamic methods as thermo mechanical analysis.

In order to obtain a sample of the respective polymers (A1) and (A2) they can be prepared alone, and not by a multistage process, for estimating and measuring more easily the glass transition temperature Tg individually of the respective polymers of the respective stages. The polymer (B1) can be extracted for estimating and measuring the glass transition temperature Tg.

The process for manufacturing the multistage polymer (MP1), suitable for use as component (a) or components (a) and (b) of the curable composition according to the invention, may comprise the steps of:

a) polymerizing by emulsion polymerization a monomer or monomer mixture (A1m) to obtain a layer comprising polymer (A1) having a glass transition temperature of less than 10°C; and

b) polymerizing by emulsion polymerization a monomer or monomer mixture (A2m) to obtain a layer comprising a polymer (A2) having a glass transition temperature of at least 60°C.

The monomer or monomer mixture (A1m) and the monomer or monomer mixture (A2m) are chosen from monomers according to the compositions for polymer (A1) and polymer (A2) as defined above. The characteristics of polymers (A1) and (A2) may be the same as defined above.

Preferably, step a) is carried out before step b). More preferably, step b) is performed in presence of polymer (A1) obtained in step a), if there are only two stages.

The process for manufacturing the multistage polymer can comprise additional steps for additional stages between the steps a) and b).

The process for manufacturing the multistage polymer can also comprise additional steps for additional stages before steps a) and b). A seed could be used for polymerizing by emulsion polymerization the monomer or monomer mixture (A1m) to obtain the layer comprising polymer (A1) having a glass transition temperature of less than 10°C. The seed is preferably a thermoplastic polymer having a glass transition temperature of at least 20°C.

The multistage polymer may be obtained as an aqueous dispersion of polymer particles. The solid content of the dispersion may be from 10 to 65 wt% based on the weight of the dispersion.

With regard to the process for manufacturing the thermoplastic polymer (B1) which may be component (b) of the curable composition of the present invention, such process may comprise the step of polymerizing a monomer or monomer mixture (B1m). The monomer or monomer mixture (B1m) is chosen from monomers according to the compositions for polymer (B1) defined above.

The thermoplastic polymer (B1) (which may be a homopolymer or copolymer) could be made in a batch or semi-continuous process:

- for the batch process, the monomer or monomer mixture (B1m) may be introduced in one shot just before or after introduction of one or part of the initiator system;
- for the semi-continuous process, the monomer or monomer mixture (B1m) may be added in multiple shots or continuously in parallel to the initiator addition (the initiator may also be added in multiple shots or continuously) during a defined period of addition, which could be in the range 30 to 500 min.

The process for preparing a polymer composition comprising both the thermoplastic polymer (B1) (component (b)) and the multistage polymer (MP1) (component (a)) has two preferred embodiments.

In a first preferred embodiment of the process, the thermoplastic polymer (B1) is prepared by polymerization of one or more suitable monomers in the presence of the multistage polymer (MP1). Accordingly, the thermoplastic polymer (B1) is made as an additional stage of the multistage polymer (MP1).

In a second preferred embodiment of the process, the thermoplastic polymer (B1) is polymerized apart from the multistage polymer (MP1) and subsequently mixed or blended with the multistage polymer (MP1).

With regard to the process according to the first preferred embodiment for preparing the polymer composition comprising the thermoplastic polymer (B1) and the multistage polymer (MP1), it may comprise the steps of:

a) polymerizing by emulsion polymerization a monomer or monomer mixture (A1m) to obtain a layer comprising polymer (A1) having a glass transition temperature of less than 10°C;
b) polymerizing by emulsion polymerization a monomer or monomer mixture (A2m) to obtain a layer comprising a polymer (A2) having a glass transition temperature of at least 60°C; and
c) polymerizing by emulsion polymerization a monomer or monomer mixture (B1m) to obtain a layer comprising a thermoplastic polymer (B1) having a glass transition temperature of at least 30°C.

Preferably, step a) is performed before step b). More preferably, step b) is performed in presence of polymer (A1) obtained in step a).

Step c) may be carried out in a manner such that at least a portion or all of the thermoplastic polymer (B1) is not grafted to polymer (A1) or polymer (A2).

The respective monomers or monomer mixture (A1m), (A2m) and (B1m) may be chosen from monomers according to the compositions for polymers (A1), (A2) and (B1) as defined above. The characteristics of the polymers (A1), (A2) and (B1) may be the same as defined before.

Preferably, the process for manufacturing the polymer composition comprising the thermoplastic polymer (B1) and the multistage polymer (MP1) comprises an additional step d) of recovering the polymer composition. By "recovering",

it is meant a partial or full separation between the aqueous and solid phase, wherein the latter phase comprises the polymer composition. More preferably, the recovering of the polymer composition is carried out by coagulation or by spray drying. Spray drying is the preferred method if the polymer (A1) having a glass transition temperature below 10°C comprises at least 50 wt% of polymeric units derived from alkyl acrylate based on the weight of polymer (A1) and stage (SA1) is the most inner layer of the polymer particle having the multilayer structure. Coagulation is the preferred if the polymer (A1) having a glass transition temperature below 10°C comprises at least 50 wt% of polymeric units derived from isoprene or butadiene based on the weight of polymer (A1) and stage (SA1) is the most inner layer of the polymer particle having the multilayer structure.

The process for manufacturing the polymer composition comprising the thermoplastic polymer (B1) and the multistage polymer (MP1) may optionally comprise an additional step e) of drying of the polymer composition. Preferably, the drying step e) is performed if step d) of recovering of the polymer composition is carried out by coagulation. Preferably, after the drying step e), the polymer composition comprises less than 3 wt%, more preferably less than 1.5 wt%, advantageously less than 1% of water based on the weight of the composition. The water content of a polymer composition may be measured using a thermo balance method. The drying of the polymer composition may be conducted in an oven, e.g., oven with heating of the composition for 48 hours at 50°C.

With regard to the process according to the second preferred embodiment for preparing the polymer composition comprising the thermoplastic polymer (B1) and the multistage polymer (MP1), such process may comprise the steps of:

a) mixing the thermoplastic polymer (B1) and the multistage polymer (MP1); and
b) recovering the mixture obtained in previous step in form of a polymer powder;
wherein the thermoplastic polymer (B1) and the multistage polymer (MP1) in step a) are in the form of a dispersion in an aqueous phase.

The quantities of the aqueous dispersion of the thermoplastic polymer (B1) and the aqueous dispersion of the multistage polymer (MP1) may be selected in such a way that the weight ratio of the multistage polymer (MP1) in the obtained mixture is at least 5 wt%, preferably at least 10 wt%, more preferably at least 20 wt% and advantageously at least 50 wt% based on the total amount of solids in the dispersion.

The quantities of the aqueous dispersion of the thermoplastic polymer (B1) and the aqueous dispersion of the multistage polymer (MP1) may be selected in such a way that the weight ratio of the multistage polymer (MP1) in the obtained mixture is at most 99 wt%, preferably at most 95 wt% and more preferably at most 90 wt% based on the total amount of solids in the dispersion.

The quantities of the aqueous dispersion of the thermoplastic polymer (B1) and the aqueous dispersion of the multistage polymer (MP1) may be selected in such a way that the weight ratio of the multistage polymer (MP1) in the obtained mixture is between 5 wt% and 99 wt%, preferably between 10 wt% and 95 wt% and more preferably between 20 wt% and 90 wt% based on the total amount of solids in the dispersion.

The recovering step b) of the process for manufacturing the polymer composition comprising the thermoplastic polymer (B1) and the multistage polymer (MP1), preferably comprises coagulation or spray drying. The process for manufacturing the polymer composition comprising the thermoplastic polymer (B1) and the multistage polymer (MP1) can optionally comprise an additional step c) of drying the polymer composition. Preferably, after the drying step e), the polymer composition comprises less than 3 wt%, more preferably less than 1.5 wt%, advantageously less than 1% of water% based on the weight of the composition. The water content of a polymer composition may be measured using a thermo balance method. The drying of the polymer composition may be conducted in an oven, e.g., oven with heating of the composition for 48 hours at 50°C.

The process for manufacturing the polymer composition comprising the thermoplastic polymer (B1) and the multistage polymer (MP1) preferably yields a polymer powder. The polymer powder may be in form of particles. The polymer powder may comprise agglomerated polymer particles made by a multistage process and the thermoplastic polymer (B1).

## Other components

Composition (P1) may further comprise an activator.

The activator may be selected so as to promote the decomposition of the radical initiator at room or ambient temperature to generate active free radical species, such that curing of the curable composition is achieved without having to heat or bake the curable composition.

In particular, the activator may be selected from a tertiary amine, a metallic salt or a potassium salt, more particularly N,N-dimethyl-p-toluidine (DMPT), N,N-dihydroxyethyl-p-toluidine (DHEPT), N,N-diethyl-p-toluidine (DEPT), para-toluidine ethoxylate (PTE), an iron, copper, cobalt, manganese or vanadium salt, and mixtures thereof. Preferably, the activator is a tertiary amine or a cobalt salt.

In one embodiment, composition (P1) comprises 0.01 to 2%, in particular 0.1 to 1%, more particularly 0.2 to 0.5%, by weight of activator based on the weight of composition (P1).

Composition (P1) may optionally contain one or more additives selected from antioxidants/photostabilizers, light blockers/absorbers, polymerization inhibitors, foam inhibitors, flow or leveling agents, colorants, pigments, dispersants (wetting agents, surfactants), slip additives, chain transfer agents, thixotropic agents, matting agents, impact modifiers (other than the multistage polymers and oligomeric polymerizing organic substances already mentioned), or other various additives.

To protect against premature gelling or curing of the curable composition, particularly in the presence of oxygen or other oxidant, one or more antioxidants may be included in composition (P1). Any of the antioxidants known in the art may be utilized, including for example phenol-based antioxidants, phosphorus-based antioxidants, quinone-type antioxidants, vitamin E and combinations thereof.

Typically, one or more antioxidants may be included in composition (P1) in a total amount of up to 4% by weight, e.g., 0.05 to 2% by weight, based on the weight of composition (P1).

Advantageously, the composition (P1) of the present invention may be formulated to be solvent-free, i.e., free of any non-reactive volatile substances (substances having a boiling point at atmospheric pressure of 150°C or less). For example, the curable compositions of the present invention may contain little or no non-reactive solvent, e.g., less than 10% or less than 5% or less than 1% or even 0% by weight of non-reactive solvent, based on the total weight of the curable composition. Such solvent-less or low-solvent compositions may be formulated using various components, including, for example, low viscosity reactive diluents (such as mono(meth)acrylates), which are selected so as to render the composition sufficiently low in viscosity, even without solvent being present, that it can be easily poured into a mold.

In one embodiment, composition (P1) may comprise a mono(meth)acrylate which is obtained by reacting adding a single (meth)acrylate group on an optionally alkoxylated monoalcohol or diol. The mono-alcohol or diol may be aliphatic, cycloaliphatic (including one or more cycloaliphatic rings) or may contain one or more aromatic rings (as in the case of phenol or bisphenol A). Examples of suitable mono-alcohols include, but are not limited to, straight chain, branched and cyclic C1-C36 mono-alcohols (which may be primary, secondary or tertiary alcohols). For instance, the mono-alcohol may be a C1-C8 saturated aliphatic mono-alcohol. In another embodiment, the mono-alcohol may be a C10-C24 saturated aliphatic mono-alcohol (e.g., lauryl alcohol, stearyl alcohol). Examples of suitable diols include ethylene glycol, 1,3-propylene glycol and 1,3- and 1,4-butylene glycol.

In particular, composition (P1) may comprise a mono(meth)acrylate selected from ethyl (meth)acrylate, n-butyl (meth)acrylate, *iso*-butyl (meth)acrylate, *tert*-butyl (meth)acrylate, pentyl (meth)acrylate, 2-ethylhexyl (meth)acrylate, octyl/decyl (meth)acrylate, *iso*-decyl (meth)acrylate, propylheptyl (meth)acrylate, dodecyl (meth)acrylate, tridecyl (meth)acrylate, stearyl (meth)acrylate, heptadecyl (meth)acrylate, cyclohexyl (meth)acrylate, benzyl (meth)acrylate, behenyl (meth)acrylate, tetrahydrofurfuryl (meth)acrylate, tert-butylcyclohexyl (meth)acrylate, trimethylcyclohexyl (meth)acrylate, polycaprolactone (meth)acrylate, (5-ethyl-1,3-dioxan-5-yl)methyl (meth)acrylate, (2,2-dimethyl-1,3-dioxolan-4-yl)methyl (meth)acrylate, tetrahydrofurfuryl (meth)acrylate, 2-phenoxyethyl (meth)acrylate, isobornyl (meth)acrylate, 2-(2-ethoxyethoxy)ethyl (meth)acrylate, 2-hydroxyethyl (meth)acrylate, 2-hydroxypropyl (meth)acrylate, 4-hydroxybutyl (metyh)acrylate, diethylene glycol mono(meth)acrylate, triethylene glycol mono(meth)acrylate, polyethylene glycol mono(meth)acrylate, methoxypolyethylene glycol mono(meth)acrylate, polypropylene glycol mono(meth)acrylate, and the alkoxylated (e.g., ethoxylated, propoxylated) derivatives thereof.

In one embodiment, composition (P1) comprises 0 to 10%, in particular 0 to 5%, more particularly 0 to 1%, even more particularly 0%, by weight of reactive diluent such as mono(meth)acrylate, based on the weight of composition (P1). In another embodiment, composition (P1) comprises 1 to 30%, in particular 5 to 25% more particularly 10 to 20%, by weight of reactive diluent such as mono(meth)acrylate, based on the weight of composition (P1).

## Composition (P2)

Composition (P2) comprises a radical initiator. Composition (P2) may comprise a mixture of radical initiators.

In particular, the radical initiator may be a peroxide, more particularly a hydroperoxide (R-O-O-H), a dialkyl peroxide (R-O-O-R) a peroxyacid (RC(O)-O-O-H), a peroxyester (RC(O)-O-O-R'), a diacyl peroxide (RC(O)-O-O-C(O)-R'), a peroxyketal and mixtures thereof, R and R' being aliphatic, cycloaliphatic or aromatic groups.

Examples of suitable peroxides include benzoyl peroxide, lauroyl peroxide, tert-butyl hydroperoxide, cyclohexanone peroxide, methylethyl peroxide, tert-butyl peroxyoctoate, tert-butyl peroxybenzoate, dicumyl peroxide, 1,1-bis(tert-butylperoxy)-3,3,5-trimethylcyclohexane, tert-butyl peroxymaleate.

The radical initiator may, in particular, be benzoyl peroxide.

In one embodiment, the curable composition of the invention comprises 0.5 to 10, in particular 1 to 5, parts by weight of composition (P2) for 100 parts by weight of composition (P1).

## Composition (P3)

The curable composition of the invention may further comprise a composition (P3) comprising an inorganic filler. Composition (P3) may comprise a mixture of inorganic fillers.
In particular, the inorganic filler may be selected from marble, granite, quartz, diatomaceous earth, feldspar, mica, gypsum, glass microspheres, rock flour, limestone, ceramic, clay, sand, silica, alumina, titanium dioxide, magnesium oxide, zirconia, talc, aluminum hydroxide, magnesium hydroxide, calcium hydroxide, zirconium hydroxide, calcium phosphate, calcium carbonate, barium sulfate and mixtures thereof.
Composition (P3) may further optionally comprise a colorant or a mixture thereof. As used herein, the term "colorant" includes mineral or organic dyes, pigments or any other substance imparting color to the composition, other than the above-mentioned fillers.
In one embodiment, the curable composition of the invention comprises 20 to 95%, in particular 50 to 90%, more particularly 60 to 80%, by weight of composition (P3) based on the total weight of compositions (P1) + (P2) + (P3).
When composition P3 is present, the curable composition of the invention may be particularly suited to obtain an artificial marble or an artificial stone as described below.

## Composition (P4)

The curable composition of the invention may further comprise a composition (P4) comprising reinforcing fibers, in particular plant fibers, glass fibers, carbon fibers, polyester fibers, aramid fibers and mixtures thereof.
In one embodiment, the curable composition of the invention comprises 20 to 95%, in particular 50 to 90%, more particularly 60 to 80%, by weight of composition (P4) based on the total weight of compositions (P1) + (P2) + (P4).
When composition P4 is present, the curable composition of the invention may be particularly suited to obtain a composite as described below.

## POLYMERIZATION PROCESS AND ARTICLE OBTAINED THEREFROM

The present invention also relates to a process comprising the polymerization of the curable composition according to the invention.
The polymerization may be carried out by mixing composition (P1) with composition (P2). Preferably, composition (P1) and composition (P2) are kept separate before the polymerization takes place. Optional compositions (P3) or (P4) may be present in the same phase as composition (P1) or composition (P2), preferably composition (P1).
The polymerization may be carried out at room temperature (20-25°C) or accelerated by heating the composition. For example, the composition may be heated at a temperature of 60°C or higher, in particular 90°C or higher. The polymerization may be carried out for a duration of at least 20 min, in particular at least 30 minutes.
In one embodiment, the curable composition may be poured into a mold and polymerized. After the composition has been poured into the mold, it may be compacted by vacuum or vibrations. The polymerization may be accelerated by heating as disclosed above. Once the composition has hardened, the article may be removed from the mold. After the article has been removed from the mold, it may be cut and polished.
The process of polymerization of the invention leads to an article.
The article of the present invention is obtained by polymerization of the curable composition according to the invention.
The article of the present invention may be a molded article, a composite, an adhesive, a chemical anchoring system, a sealant, a dental filler or an electrical insulation coating.
In one embodiment, the article may be a molded article obtained by polymerization of the curable composition of the invention in a mold. In particular, the article of the present invention may be an artificial marble or an artificial stone.
As used herein, the term "artificial marble" refers to an article having the appearance of marble that comprises a mineral filler dispersed in a polymer matrix. The artificial marble may be in the form of a slab or block.
As used herein, the term "artificial stone" refers to an article having the appearance of a stone that comprises a mineral filler dispersed in a polymer matrix. The artificial stone may be in the form of a slab or block.
The article of the present invention may be relatively thick. In particular, the article may exhibit a thickness of at least 0.2 cm, in particular at least 0.5 cm, more particularly at least 1 cm, even more particularly at least 2 cm. As used herein, the term "thickness" intends to mean the dimension in a perpendicular direction with respect to the plane of the article having the largest area.
Accordingly, the curable composition of the invention may be used for the preparation of a molded article, a composite, an adhesive, a chemical anchoring system, a sealant, a dental filler or an electrical insulation coating; in particular an artificial marble or an artificial stone.
The artificial marbles and artificial stones obtained according to the invention have excellent aesthetic value,

with patterns and chromatic shades which cannot always be found in natural materials. Compared to conventional polyester-based artificial marbles or artificial stones, the artificial marble or artificial stone of the invention exhibits a shiny surface that is not prone to yellowing, even after aging in exterior conditions under UV radiation. Furthermore, it exhibits excellent thermal resistance, excellent resistance to chemical agents, solvents and staining agents and excellent mechanical resistance.

## USE OF THE ADDITIVE (AD)

The present invention also relates to the use of an additive in a curable composition to reduce cure shrinkage and prevent formation of cracks during the polymerization of the composition.

The additive used according to the present invention corresponds to the additive (AD) as defined above comprising:

a) a multistage polymer (MP1) comprising

a1) one stage (SA1) comprising a polymer (A1) having a glass transition temperature of less than 10°C; and
a2) one stage (SA2) comprising a polymer (A2) having a glass transition temperature of at least 60°C; and

b) a thermoplastic polymer (B1) having a glass transition temperature of at least 30°C.

The curable composition in which the additive (AD) is used is not particularly limited. In particular, the curable composition may comprise an ethylenically unsaturated compound, preferably a compound comprising a (meth)acrylate group, more preferably a compound comprising a methacrylate group, and optionally a radical initiator. The ethylenically unsaturated compound may be a monomer (M1) as defined above, an oligomer (O1) as defined above and mixtures thereof. The radical initiator may be as defined above.

In one embodiment, the curable composition in which the additive (AD) is used comprises:

a) a first composition (P1') comprising:

- a monomer (M1) comprising at least 2, preferably 2 to 4, more preferably 2 or 3, (meth)acrylate groups, the monomer (M1) having a weight average molecular weight (Mw) of 100 to 420 g/mol, in particular 200 to 350 g/mol;
- an oligomer (O1) comprising at least 2 ethylenic unsaturations, preferably 2 to 10 ethylenic unsaturations, the oligomer (O1) having a weight average molecular weight (Mw) of 421 to 10 000 g/mol, in particular 450 to 3 000 g/mol;

b) a second composition (P2') comprising a radical initiator.

The amount of additive (AD) used to reduce cure shrinkage and prevent the formation of cracks during polymerization of the composition is advantageously low. In particular, the amount of additive (AD) used in the composition may be 1 to 15%, in particular 2 to 10%, more particularly 3 to 8%, even more particularly 4 to 6%, by weight based on the total weight of the ethylenically unsaturated compounds (in particular based on the total weight of monomer (M1) and oligomer (O1)).

The invention is further detailed in the following examples which are given for illustrative purpose only and do not intend to limit the scope of the invention.

## EXAMPLES

### Materials and methods

The following compounds were used in the examples:

| Reference (Supplier) | Type | Chemical name | CAS | (Meth) acrylate functionality | Mw (g/mol) | %C=C |
|---|---|---|---|---|---|---|
| SR210 (Arkema) | Monomer | tetraethylene glycol dimethacrylate | 109-17-1 | 2 | 336 | 14.3 |
| SR214 (Arkema) | | 1,4-butanediol dimethacrylate | 2082-81-7 | 2 | 226 | 21.2 |
| SR206 (Arkema) | | ethylene glycol dimethacrylate | 97-90-5 | 2 | 198 | 24.2 |
| SR205 (Arkema) | | triethylene Glycol dimethacrylate | 109-16-0 | 2 | 286 | 16.7 |
| SR239 (Arkema) | | 1,6-hexanediol dimethacrylate | 6606-59-3 | 2 | 254 | 18.9 |
| SR350 (Arkema) | | trimethylolpropane methacrylate | 3290-92-4 | 3 | 338 | 21.3 |
| CN1964CG (Arkema) | Oligomer | urethane dimethacrylate | 72869-86-4 | 2 | 650 | 7.4 |
| CN159 (Arkema) | | diglycidyl bisphenol A dimethacrylate | 36425-15-7 | 2 | 550 | 8.7 |
| Peroxan® BP-40 LV (Pergan) | Peroxide | dibenzoyl peroxide | 94-36-0<br>78-40-0 | - | - | - |
| Luperox® P (Arkema) | | t-butyl peroxybenzoate | 614-45-9 | - | - | - |
| Pergaquick® A150PM (Pergan) | Tertiary amine | Ethoxylates of para-toluidine | - | - | - | - |
| Clearstrength® E950 (Arkema) | Additive | methacrylate-butadiene-styrene core/shell impact modifier | - | - | - | - |
| Durastrength® 440 (Arkema) | | fully acrylic core/shell impact modifier | - | - | - | - |
| Geniopearl® P52 (Wacker) | | Core/shell impact modifier comprising a cross-linked silicone core and a hard shell | - | - | - | - |
| Altuglas® BS520 (Arkema) | | Beads of methyl methacrylate and ethyl acrylate copolymer | - | - | - | - |

The following methods were used in the application:

Mixing method

The additive (AD), when present, was dispersed in monomer (M1) and oligomer (O1) by mixing in a reactor with mechanical stirring at 2,000 to 2,500 rpm during 30 to 45 min at 25°C (optionally with an additional heating step at 50°C to improve the dispersion of the additive).

Bulk polymerization method

The mixture of monomer (M1), oligomer (O1) and additive (AD), when present, obtained with the mixing method was mixed together in a reactor with mechanical stirring with 4 parts by weight of Peroxan® BP-40 LV and 0.5 parts by weight of Pergaquick© 150PM, the parts by weight being based on 100 parts by weight of monomer (M1) and oligomer (O1). The mixture (120 g) was poured in a metallic cup having a diameter of 5 cm and left to cure at room temperature for 10 min. Once the reaction was finished, a solid material having diameter of 5 cm and a thickness of 3.5 cm was removed from the mold and cleaned with acetone.

Test tube polymerization method

The mixture of monomer (M1), oligomer (O1) and additive (AD), when present, obtained with the mixing method was mixed in a reactor with mechanical stirring with 5 parts by weight of Peroxan® BP-40 LV and 0.5 parts by weight of tertiary amine, the parts by weight being based on 100 parts by weight of monomer (M1) and oligomer (O1). The mixture (25 g) was poured in a glass test tube having a diameter of 1.5 cm placed in a thermostatically-controlled water bath at 25°C. The gel time (Tgel in minutes) and exothermic peak (TEP in °C) were determined by measuring the temperature (in °C) of the composition as a function of time (in seconds) using a platinum temperature probe PT100 and a Yokogawa monitor. Once the reaction was finished, a solid material having diameter of 1.5 cm and a thickness of 8 cm was obtained.

Thin plate polymerization method

The mixture of monomer (M1), oligomer (O1) and additive (AD), when present, obtained with the mixing method was mixed together in a reactor with mechanical stirring with 1 part by weight of Luperox® P based on 100 parts by weight of monomer (M1) and oligomer (O1). The mixture (60 g) was poured between two glass plates (9 x 14 cm) separated by a 4 mm seal. The system was placed in an oven for 1h at 60°C, then 30 min at 80°C, 30 min at 100°C and 30 min at 120°C. Once the reaction was finished, a solid material having a width of 9 cm, a length of 14 cm and a thickness of 4 mm was removed from the mold and cleaned with acetone.

Weight average molecular weight

The weight average molecular weight was determined by size exclusion chromatography (SEC) according to OCDE (1996), Test No. 118: Determination of the Number-Average Molecular Weight and the Molecular Weight Distribution of Polymers using Gel Permeation Chromatography, OECD Guidelines for the Testing of Chemicals, Section 1, Éditions OCDE, Paris. The following conditions were used:

- 2 columns mixed D (ref. 1110-6504) + 1 column 100Å (ref. 1110-6520) + 1 column 50Å (ref. 1110-6515), (7.8mm x 300mm) supplied by Agilent, the stationary phase being a crosslinked polystyrene-divinylbenzene (PS-DVB) gel
- flow rate of mobile phase (THF) : 1 ml/min
- column temperature°: 35°C
- detector: refractive index (RI)
- calibration: polystyrene standard (Mw : 483.400, 215.000, 113.300, 51.150, 19.540, 10.110, 4.430, 2.930, 1.320, 575, 162 g/mol).

Glass transition temperature

The glass transition temperatures (Tg) were measured by Dynamic Mechanical Analysis (DMA). The samples were stored at 23°C +/- 2 C and a relative humidity of 50% +/- 10% for 24 hours before testing. DMA measures the visco-elastic changes of a sample as a function of the temperature, the strain or the deformation applied. The apparatus records continuously the sample deformation, keeping the strain fixed, during a controlled program of temperature variation. The results are obtained by drawing, as a function of the temperature, the elastic modulus (G', MPa), the loss modulus (G", MPa) and the tan delta. The Tg is the highest temperature value read in the tan delta curve, when the derivative of tan delta is equal to zero.

The Tg of the different stages of the multistage polymer (SA1, SA2, B1, etc...) were measured with a "Rheometric Scientific RDA III Dynamic Mechanical Analyzer" on samples (40x5x2 mm) in torsion mode with a frequency of 1 Hz and strain of 0.05%. The temperature was increased from -100 to 200°C with a heating rate of 3°C/min.

The Tg of the oligomers (O1) and the polymerized products were measured with a "Rheometric Scientific RSA II Dynamic Mechanical Analyzer" on samples (80 x 10 x 4 mm, distance between bits = 25 mm) in torsion mode with a

frequency of 1 Hz and strain of 0.05%. The temperature was increased from -60 to 200°C with a heating rate of 3°C/min.

Particle size analysis

The particle size of the primary particles after the multistage polymerization was measured with a Zetasizer.

The particle size of the polymer powder after recovering was measured with Malvern Mastersizer 3000 from MALVERN.

For the estimation of the weight average powder particle size, particle size distribution and ratio of fine particles, a Malvern Mastersizer 3000 apparatus with a 300 mm lenses, measuring a range from 0,5-880 μm was used.

Viscosity

The viscosity was measured using a Brookfield viscometer (Fungilab alpha series) with a circulating water temperature regulation system to ensure a constant temperature of 25°C.

Three-point flexural test (breaking stress, breaking deflexion, flexural modulus)

The three-point flexural test was carried out on a MTS 1M/H traction bench at 23°C using standard ISO 178:2001. The velocity was 2 mm/min and the distance between the two supporting pins was 6.4 cm (16 x thickness). The average thickness of the sample was 4 mm and the radius of the punch was 5 mm.

Hardness

The hardness was determined according to Standard ISO 868:1986 with a type D Shore durometer. The measures were taken after 5 seconds of contact between the indenter and the sample.

Charpy impact test

The Charpy impact test was carried out according to Standard ISO 179-1:2010 on an MTS Exceed E21 apparatus. The measures were taken at 23°C with a relative humidity of 50% on unnotched specimens (80 x 10 x 4 mm) with a flatwise impact using pendulum 2J.

**Synthesis example 1: Preparation of additive (AD) according to the invention**

The multistage polymer (MP1) was made in two stages according to the following synthesis:

**First stage (SA1)** - **polymerization of polymer (A1):** To a 20 litres high-pressure reactor were charged : 116.5 parts of de-ionized water, 0.1 part of emulsifier (potassium salt of beef tallow fatty acid), 21.9 parts of 1,3-butadiene (BD), 0.1 part of t-dodecyl mercaptan, and 0.1 part of p-menthane hydroperoxide as an initial kettle charge. The solution was heated, with agitation, to 43°C at which time a redox-based catalyst solution was charged (water 4.5 parts, sodium tetrapyrophosphate 0.3 parts, ferrous sulphate 0.004 parts and dextrose 0.3 parts), effectively initiating the polymerization. Then the solution was further heated to 56°C and held at this temperature for a period of three hours. Three hours after polymerization initiation, a second monomer charge (77.8 parts BD, t-dodecyl mercaptan 0.2 parts), one-half of an additional emulsifier and reductant charge (de-ionized water 30.4 parts, emulsifier potassium salt of beef tallow fatty acid 2.8 parts, dextrose 0.5 parts) and additional initiator (p-menthane hydroperoxide 0.8 parts) were continuously added over eight hours. Following the completion of the second monomer addition, the remaining emulsifier and reductant charge plus initiator were continuously added over an additional five hours. Thirteen hours after polymerization initiation, the solution was heated to 68°C and allowed to react until at least twenty hours had elapsed since polymerization initiation, producing **polybutadiene rubber latex R1** (A1). The resultant **polybutadiene rubber latex R1** contained 38% solids and had a weight average particle size of about 160 nm.

**Second stage (SA2)** - **Polymerization of polymer type (A2):** To a 3.9 litres reactor were charged 75.0 parts, on a solids basis, of **polybutadiene rubber latex R1**, 37.6 parts de-ionized water, and 0.1 parts sodium formaldehyde sulfoxylate. The solution was agitated, purged with nitrogen, and heated to 77°C. When the solution reached 77°C, a mixture of 22.6 parts methyl methacrylate, 1.4 parts divinyl benzene and 0.1 parts t-butyl hydroperoxide initiator was continuously added over 70 minutes, followed by a hold period of 80 minutes. Thirty minutes after the onset of the hold period, 0.1 parts of sodium formaldehyde sulfoxylate and 0.1 parts t-butyl hydroperoxide were added to

the reactor. Following a 80-minute hold period, a stabilization emulsion was added to the graft copolymer latex. The stabilization emulsion was prepared by mixing 3.2 parts de-ionized water (based on graft copolymer mass), 0.1 parts oleic acid, 0.1 parts potassium hydroxyde, and 0.9 parts octadecyl-3-(3,5-di-tertbutyl-4-hydroxyphenyl)propionate. The resultant core shell polymer (A1+A2) had a weight average particle size of about 180 nm. The final multistage polymer (MP1) was then recovered, the polymer composition being coagulated and dried giving a powder of **core/shell-1**.

According to a preferred embodiment, the thermoplastic polymer (B1) having a glass transition temperature of at least 30°C is made as an additional stage on the multistage polymer (MP1) according to the following synthesis:
**Synthesis of polymer (B1) with a semi continuous process:** To a reactor with stirring, were charged 10,000 g of **core/shell-1** (A1+A2) still in dispersion in de-ionized water, 0.01 g of FeSO4 and 0.032 g of ethylenediaminetetraacetic acid, sodium salt (dissolved in 10 g of de-ionized water), 3.15 g of sodium formaldehydesulfoxylate dissolved in 110 g of de-ionized water and 21.33 g of emulsifier (potassium salt of beef tallow fatty acid) dissolved in 139.44 g of water, and the mixture was stirred until complete dissolution of added raw materials except the core-shell polymer. Three vacuum-nitrogen purges were carried out in succession and the reactor left under a slight vacuum. The reactor was then heated. At the same time, a monomer mixture comprising 1066.7 g of methyl methacrylate and 10.67 g of n-octyl mercaptan was nitrogen-degassed for 30 minutes. The reactor was heated at 63°C and maintained at that temperature. The monomer mixture was then introduced into the reactor in 180 min using a pump. In parallel, a solution of 5.33 g of ter-butyl hydroperoxide (dissolved in 100 g of de-ionized water) was introduced (same addition time). The lines were rinsed with 50 g and 20 g of water. The reaction mixture was then heated at a temperature of 80°C and the polymerization was then left to completion for 60 minutes after the end of the addition of the monomer mixture. The reactor was cooled down to 30°C. The weight average molecular weight of polymer (B1) was $M_w$= 28 000g/mol.

The final polymer composition consisting of the multistage polymer (MP1) and polymer (B1) was then recovered, the polymer composition being coagulated and dried giving a powder of **core/shell-2.**

**Example 1: Curable compositions**

Curable compositions were obtained by mixing a monomer (M1), an oligomer (O1) and optionally an additive (AD) in the amounts given in the following table (the % are % by weight based on the total weight of monomer (M1), oligomer (O1) and additive (AD), the phr. are parts by weight based on 100 parts by weight of monomer (M1) and oligomer (O1)):

| Sample | Monomer (M1) (wt%) | Oligomer (O1) (wt%) | (O1)/(M1) wt/wt | Additive (AD) (wt% - phr) | % C=C |
|---|---|---|---|---|---|
| 1a | SR210 (28.6%) | CN159 (66.6%) | 70/30 | core/shell-2 (4.8% - 5 phr) | 10.39 |
| 1b | SR210 (27.3%) | CN159 (63.6%) | 70/30 | core/shell-2 (9.1% - 10 phr) | 10.39 |
| Comp 1 | SR210 (30%) | CN159 (70%) | 70/30 | - | 10.39 |
| 2a | SR210 (28.6%) | CN1964CG (66.6%) | 70/30 | core/shell-2 (4.8% - 5 phr) | 9.45 |
| 2b | SR210 (27.3%) | CN1964CG (63.6%) | 70/30 | core/shell-2 (9.1% - 10 phr) | 9.45 |
| Comp 2 | SR210 (30%) | CN1964CG (70%) | 70/30 | - | 9.45 |
| 3a | SR210 (47.6%) | CN1964CG (47.6%) | 50/50 | core/shell-2 (4.8% - 5 phr) | 10.84 |
| 3b | SR210 (45.45%) | CN1964CG (45.45%) | 50/50 | core/shell-2 (9.1% - 10 phr) | 10.84 |
| Comp 3 | SR210 (50%) | CN1964CG (50%) | 50/50 | - | 10.84 |

(continued)

| Sample | Monomer (M1) (wt%) | Oligomer (O1) (wt%) | (O1)/(M1) wt/wt | Additive (AD) (wt% - phr) | % C=C |
|---|---|---|---|---|---|
| 4a | SR210 (66.6%) | CN1964CG (28.6%) | 30/70 | core/shell-2 (4.8% - 5 phr) | 12.22 |
| 4b | SR210 (63.6%) | CN1964CG (27.3%) | 30/70 | core/shell-2 (9.1% - 10 phr) | 12.22 |
| Comp 4 | SR210 (70%) | CN1964CG (30%) | 30/70 | - | 12.22 |
| 5a | SR214 (66.6%) | CN1964CG (28.6%) | 30/70 | core/shell-2 (4.8% - 5 phr) | 17.08 |
| Comp 5 | SR214 (70%) | CN1964CG (30%) | 30/70 | - | 17.08 |
| 6a | SR206 (66.6%) | CN1964CG (28.6%) | 30/70 | core/shell-2 (4.8% - 5 phr) | 19.19 |
| Comp 6 | SR206 (70%) | CN1964CG (30%) | 30/70 | - | 19.19 |
| 7a | SR205 (66.6%) | CN1964CG (28.6%) | 30/70 | core/shell-2 (4.8% - 5 phr) | 13.96 |
| Comp 7 | SR205 (70%) | CN1964CG (30%) | 30/70 | - | 13.96 |
| 8a | SR239 (66.6%) | CN1964CG (28.6%) | 30/70 | core/shell-2 (4.8% - 5 phr) | 15.44 |
| Comp 8 | SR239 (70%) | CN1964CG (30%) | 30/70 | - | 15.44 |
| 9a | SR350 (66.6%) | CN1964CG (28.6%) | 30/70 | core/shell-2 (4.8% - 5 phr) | 17.13 |
| Comp 9 | SR350 (70%) | CN1964CG (30%) | 30/70 | - | 17.13 |

The ingredients were mixed according to the mixing method and the compositions were cured using the bulk polymerization method, the thin plate polymerization method and the test tube polymerization method.

**Example 2: Effect of the additive (AD) on cure shrinkage and crack reduction**

The presence of cracks in the materials obtained using the bulk polymerization method for Samples 2a, Comp 2, 3a, Comp 3, 4a and Comp 4 of Example 1 was assessed visually.

| Sample | (O1)/(M1) wt/wt | core/shell-2 (wt% - phr) | Presence of cracks |
|---|---|---|---|
| 2a | 70/30 | 4.8% - 5 phr | Hazy<br>No cracks |
| Comp 2 | 70/30 | 0 | Hazy<br>No cracks |
| 3a | 50/50 | 4.8% - 5 phr | Slightly hazy<br>Slightly cracked |

(continued)

| Sample | (O1)/(M1) wt/wt | core/shell-2 (wt% - phr) | Presence of cracks |
|---|---|---|---|
| Comp 3 | 50/50 | 0 | Hazy<br>Highly cracked |
| 4a | 30/70 | 4.8% - 5 phr | Transparent<br>No cracks |
| Comp 4 | 30/70 | 0 | Hazy<br>Highly cracked |
| 7a | 30/70 | 4.8% - 5 phr | Transparent<br>Slightly cracked |
| Comp 7 | 30/70 | 0 | Hazy<br>Highly cracked |
| 8a | 30/70 | 4.8% - 5 phr | Transparent<br>No cracks |
| Comp 8 | 30/70 | 0 | Hazy<br>Slightly cracked |
| 9a | 30/70 | 4.8% - 5 phr | Moderately hazy<br>Moderately cracked |
| Comp 9 | 30/70 | 0 | Hazy<br>Highly cracked |

The samples containing a high amount of monomer (such as samples 4a and Comp 4) were more prone to the formation of cracks during polymerization. The addition of 5 phr. of additive (AD) according to the invention reduced the formation of cracks during polymerization for the mixtures having weight ratio between the oligomer (O1) and the monomer (M1) of 50/50 and 30/70. The introduction of the additive (AD) according to the invention also decreased the haziness of the material.

The introduction of higher amounts of additive (AD) according to the invention (10 phr. in Samples 4b, 5b and 6b) did not further improve the crack reduction obtained with 5 phr. of additive (AD) according to the invention.

The reduction of the formation of cracks with 5 phr. of additive (AD) according to the invention is confirmed with other difunctional monomers. Indeed, the materials obtained with samples 7a, 8a and 9a of Example 1 have less cracks or no cracks at all and are less hazy compared to the same material without any additive (respectively Comp 7, Comp 8 and Comp 9). Sample 8a obtained with SR239 is particularly interesting as it appears transparent, with reduced yellowness compared to Comp 8, and is crack-free.

**Example 3: Effect of the additive (AD) on thermal reactivity**

The thermal reactivity was assessed during the test tube polymerization method for Samples 2a, Comp 2, 3a, Comp 3, 4a and Comp 4 of Example 1. A photograph of each sample is shown in Figure 1. The gel time (Tgel in minutes) and exothermic peak (TEP in °C) for each sample is shown in the table below and in Figure 2.

| Sample | CN1964CG/SR210 wt/wt | core/shell-2 %wt - phr | Tgel (min) | TEP (°C) | Presence of cracks |
|---|---|---|---|---|---|
| 2a | 70/30 | 4.8% - 5 phr | 5.9 | 130 | No cracks |
| Comp 2 | 70/30 | 0 | 5.1 | 142 | No cracks |
| 3a | 50/50 | 4.8% - 5 phr | 6.8 | 150 | No cracks |
| Comp 3 | 50/50 | 0 | 5.9 | 155 | Slightly cracked |
| 4a | 30/70 | 4.8% - 5 phr | 7.1 | 158 | No cracks |

(continued)

| Sample | CN1964CG/SR210 wt/wt | core/shell-2 %wt - phr | Tgel (min) | TEP (°C) | Presence of cracks |
|---|---|---|---|---|---|
| Comp 4 | 30/70 | 0 | 6.3 | 160 | Highly cracked |

The addition of 5 phr. of additive (AD) in a mixture of monomer (M1) and oligomer (O1) reduced the formation of cracks during polymerization without significantly changing the polymerization kinetics (slight difference is within experimental error range).

**Example 4: Effect of the additive (AD) on mechanical properties**

The mechanical properties of the materials obtained using the thin plate polymerization method for Samples 2a, 2b and Comp 2 of Example 1 are shown in the table below:

| | | Comp 2 (0 phr. additive) | 2a (5 phr. additive) | 2b (10 phr. additive) |
|---|---|---|---|---|
| Breaking stress (MPa) | | 105 (+/- 8) | 110 (+/- 6) | 88 (+/- 6) |
| Breaking deflexion (mm) | | 9 (+/- 1.5) | 10.5 (+/- 0.4) | 8 (+/- 1.5) |
| Flexural modulus (GPa) | | 2.6 (+/- 0.1) | 2.7 (+/- 0.06) | 2.5 (+/- 0.02) |
| Hardness (Shore D) | | 78 | 82 | 80 |
| Glass transition temperature (DMA) | Tg (°C) | 133 | 135 | 137 |
| | G' 200°C (Pa) | $4.00 \times 10^7$ | $4.20 \times 10^7$ | $3.20 \times 10^7$ |
| Impact resistance ($kJ/m^2$) | | 13.5 | 13 | 6 |

The addition of 5 phr. of additive (AD) in a mixture of monomer (M1) and oligomer (O1) does not significantly change the mechanical properties of the resulting material (slight difference is within experimental error range). The addition of 10 phr. of additive (AD) in a mixture of monomer (M1) and oligomer (O1) leads to a reduction of the breaking stress, the storage modulus E' in the rubbery region and the impact resistance of the resulting material.

**Example** 5: **Comparative with other additives**

The presence of cracks in the materials obtained using the bulk polymerization method for Samples 4a and Comp 4 of Example 1 comprising the additive (AD) according to the invention was compared to that obtained with other additives (not according to the invention). A photograph of each sample is shown in Figure 3.

| Sample | CN1964CG/SR210 wt/wt | phr. of additive | Observations |
|---|---|---|---|
| 4a | 30/70 | 5 phr. core/shell 2 | Transparent<br>No cracks |
| Comp 4 | 30/70 | 0 | Hazy<br>Highly cracked |
| Comp 9 | 30/70 | 5 phr. Clearstrength® E950 | Transparent<br>Slightly cracked |
| Comp 10 | 30/70 | 5 phr. Durastrength® 440 | Uniformly white<br>Highly cracked |
| Comp 11 | 30/70 | 5 phr. Geniopearl® P52 | Inhomogeneously white and yellow<br>Slightly cracked |
| Comp 12 | 30/70 | 5 phr. Altuglas® BS520 | Sedimentation of additive<br>Highly cracked |

Only Sample 4a according to the invention led to a transparent and crack-free polymerized article.

## Claims

1. A curable composition comprising:

   i) a composition (P1) comprising:

   - a monomer (M1) comprising at least 2, preferably 2 to 4, more preferably 2 or 3, (meth)acrylate groups, the monomer (M1) having a weight average molecular weight (Mw) of 100 to 420 g/mol, in particular 200 to 350 g/mol;
   - an oligomer (O1) comprising at least 2 ethylenic unsaturations, preferably 2 to 10 ethylenic unsaturations, the oligomer (O1) having a weight average molecular weight (Mw) of 421 to 10 000 g/mol, in particular 450 to 3 000 g/mol;
   - an additive (AD) comprising:

     a) a multistage polymer (MP1) comprising

     a1) one stage (SA1) comprising a polymer (A1) having a glass transition temperature of less than 10°C; and
     a2) one stage (SA2) comprising a polymer (A2) having a glass transition temperature of at least 60°C; and

     b) a thermoplastic polymer (B1) having a glass transition temperature of at least 30°C; and

   ii) a composition (P2) comprising a radical initiator.

2. The curable composition according to claim 1, **characterized in that** monomer (M1) comprises at least 2, preferably 2 to 4, more preferably 2 or 3, methacrylate groups.

3. The curable composition according to claim 1 or 2, **characterized in that** monomer (M1) is represented by the following formula:

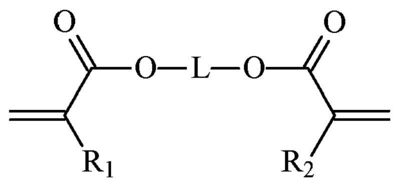

   wherein

   $R_1$ and $R_2$ are independently H or methyl, preferably $R_1$ and $R_2$ are methyl;
   L is a divalent radical selected from alkylene or polyoxyalkylene;
   in particular L is a divalent radical selected from $-(CR_3R_4)_a-$, $-[(CR_5R_6)_b-O]_c-$ and $-[(CR_7R_8)_d-O]_e-(CR_9R_{10})_f-[O-(CR_{11}R_{12})_g]_h$
   $R_3$, $R_4$, $R_5$, $R_6$, $R_7$, $R_8$, $R_9$, $R_{10}$, $R_{11}$ and $R_{12}$ are independently H or methyl;
   a is 2 to 10;
   b, d, f and g are independently 2 to 6;
   c, e and h are independently 1 to 10 ;
   more particularly L is a divalent radical selected from ethylene, 1,3-propylene, 1,4-butylene, 1,3-butylene, 1,5-pentamethylene, 1,6-hexamethylene, a residue of di-, tri- or tetraethylene glycol, a residue of di-, tri- or tetrapropylene glycol, a residue of di-, tri- or tetrabutylene glycol, and mixtures thereof.

4. The curable composition according to claim 1 or 2, **characterized in that** monomer (M1) is represented by the following formula:

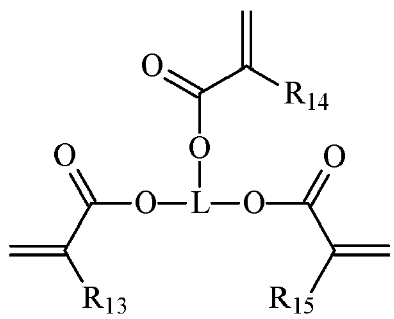

wherein

$R_{13}$, $R_{14}$ and $R_{15}$ are independently H or methyl, preferably $R_{13}$, $R_{14}$ and $R_{15}$ are methyl;
L is a trivalent radical selected from alkylene or polyoxyalkylene;

in particular L is a trivalent radical represented by the following formula:

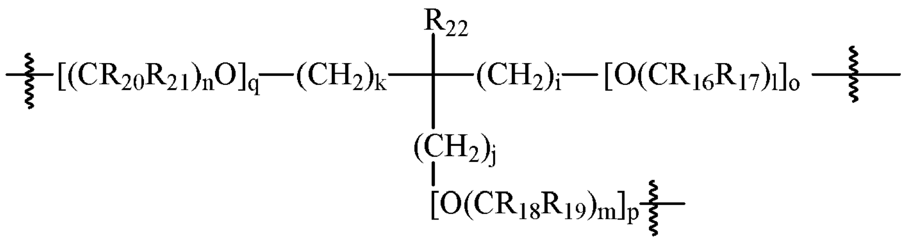

wherein

$R_{16}$, $R_{17}$, $R_{18}$, $R_{19}$, $R_{20}$ and $R_{21}$ are independently H or methyl;
$R_{22}$ is selected from H, OH, alkyl, alkoxy and alkyl substituted with a hydroxy group;
i, j and k are independently 0 to 2, with the proviso that at least 2 among i, j and k are not 0;
l, m and n are independently 2 to 6;
o, p and q are independently 0 to 4.

5. The curable composition according to any of claims 1 to 4, **characterized in that** composition (P1) comprises 15 to 80%, in particular 20 to 75%, more particularly 25 to 70%, by weight of monomer (M1) based on the weight of composition (P1).

6. The curable composition according to any of claims 1 to 5, **characterized in that** oligomer (O1) is selected from an epoxy (meth)acrylate, a urethane (meth)acrylate, a polyester (meth)acrylate, a polyether (meth)acrylate, a (meth)acrylated poly(meth)acrylate, an unsaturated polyester, a polybutadiene, a vinyl ether, including the amine-modified or thiol-modified derivatives of the aforementioned oligomers, and mixtures thereof; in particular oligomer (O1) is selected from an epoxy (meth)acrylate, a urethane (meth)acrylate, a polyester (meth)acrylate, a polyether (meth)acrylate, and mixtures thereof; more particularly oligomer (O1) is selected from an epoxy methacrylate, a urethane methacrylate, a polyester methacrylate, a polyether methacrylate, and mixtures thereof.

7. The curable composition according to any of claims 1 to 6, **characterized in that** composition (P1) comprises 15 to 80%, in particular 20 to 75%, more particularly 25 to 70%, by weight of oligomer (O1) based on the based on the weight of composition (P1).

8. The curable composition according to any of claims 1 to 7, **characterized in that** composition (P1) comprises 1 to 13%, in particular 1.5 to 10%, more particularly 2.5 to 8%, even more particularly 3.5 to 6%, by weight of additive (AD) based on the weight of composition (P1).

9. The curable composition according to any of claims 1 to 8, **characterized in that** composition (P2) comprises a peroxide as the radical initiator; in particular a hydroperoxide (R-O-O-H), a dialkyl peroxide (R-O-O-R) a peroxyacid

(RC(O)-O-O-H), a peroxyester (RC(O)-O-O-R'), a diacyl peroxide (RC(O)-O-O-C(O)-R'), a peroxyketal, and mixtures thereof, R and R' being R and R' being aliphatic, cycloaliphatic or aromatic groups.

**10.** The curable composition according to any of claims 1 to 9, **characterized in that** composition (P1) further comprises an activator, in particular an activator selected from a tertiary amine, a metallic salt or a potassium salt, more particularly N,N-dimethyl-p-toluidine (DMPT), N,N-dihydroxyethyl-p-toluidine (DHEPT), N,N-diethyl-p-toluidine (DEPT), para-toluidine ethoxylate (PTE), an iron, copper, cobalt, manganese or vanadium salt, and mixtures thereof; more particularly an activator selected from a tertiary amine or cobalt salt.

**11.** The curable composition according to any of claims 1 to 10, **characterized in that** it comprises 0.5 to 10, in particular 1 to 5, parts by weight of composition (P2) for 100 parts by weight of composition (P1).

**12.** The curable composition according to any of claims 1 to 11, **characterized in that** it further comprises a composition (P3) comprising an inorganic filler, in particular an inorganic filler selected from marble, granite, quartz, diatomaceous earth, feldspar, mica, gypsum, glass microspheres, rock flour, limestone, ceramic, clay, sand, silica, alumina, titanium dioxide, magnesium oxide, zirconia, talc, aluminum hydroxide, magnesium hydroxide, calcium hydroxide, zirconium hydroxide, calcium phosphate, calcium carbonate, barium sulfate and mixtures thereof.

**13.** The curable composition according to claim 12, **characterized in that** it comprises 20 to 95%, in particular 50 to 90%, more particularly 60 to 80%, by weight of composition (P3) based on the total weight of compositions (P1) + (P2) + (P3).

**14.** The curable composition according to any of claims 1 to 13, **characterized in that** it further comprises a composition (P4) comprising reinforcing fibers, in particular plant fibers, glass fibers, carbon fibers, polyester fibers, aramid fibers and mixtures thereof.

**15.** The curable composition according to claim 14, **characterized in that** it comprises 20 to 95%, in particular 50 to 90%, more particularly 60 to 80%, by weight of composition (P4) based on the total weight of compositions (P1) + (P2) + (P4).

**16.** A process comprising the polymerization of the curable composition as defined in any of claims 1 to 15.

**17.** An article obtained by the polymerization of the curable composition as defined in any of claims 1 to 15.

**18.** The article according to claim 17, **characterized in that** exhibits a thickness of at least 0.2 cm, in particular at least 0.5 cm, more particularly at least 1 cm, even more particularly at least 2 cm.

**19.** The article according to claim 17 or 18, **characterized in that** it is a molded article, a composite, an adhesive, a chemical anchoring system, a sealant, a dental filler or an electrical insulation coating, in particular the articles is an artificial marble or an artificial stone.

**20.** A use of the curable composition as defined in any of claims 1 to 15, for the preparation of a molded article, a composite, an adhesive, a chemical anchoring system, a sealant, a dental filler or an electrical insulation coating; in particular for the preparation of an artificial marble or an artificial stone.

**21.** A use of an additive in a curable composition to reduce cure shrinkage and prevent the formation of cracks during the polymerization of the composition, the additive being an additive (AD) comprising:

a) a multistage polymer (MP1) comprising

a1) one stage (SA1) comprising a polymer (A1) having a glass transition temperature of less than 10°C; and
a2) one stage (SA2) comprising a polymer (A2) having a glass transition temperature of at least 60°C; and

b) a thermoplastic polymer (B1) having a glass transition temperature of at least 30°C.

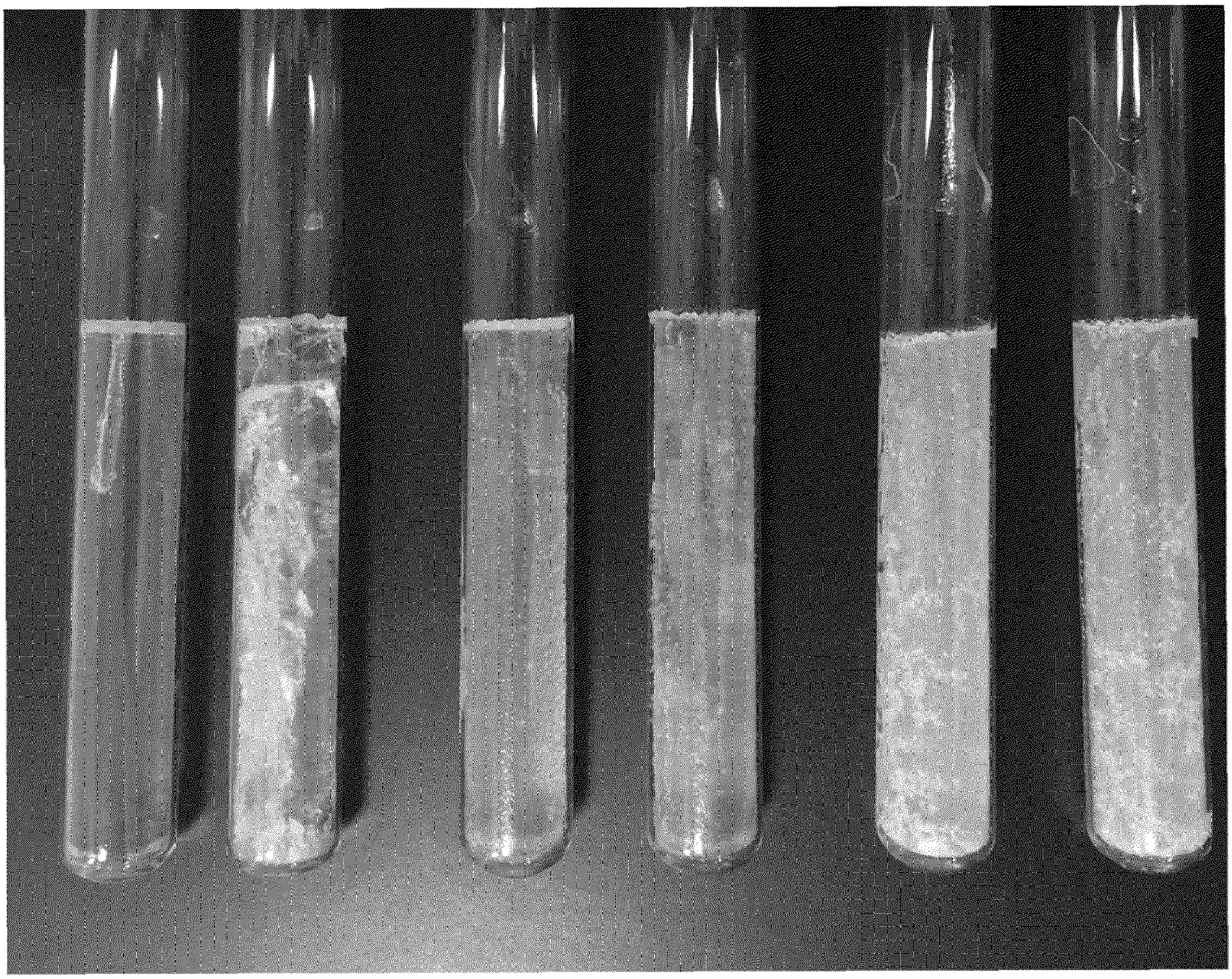

4a Comp 4 3a Comp 3 2a Comp 2

FIGURE 1

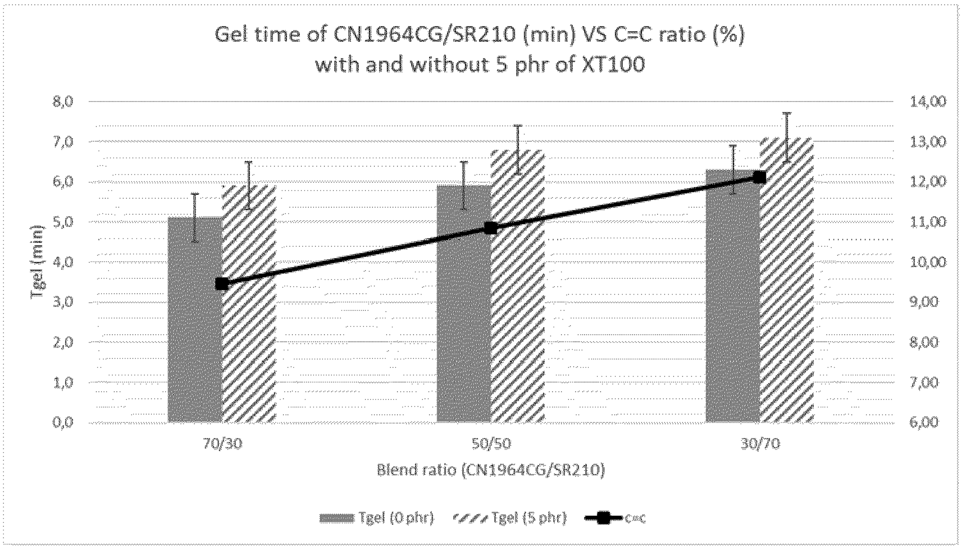

Gel time of CN1964CG/SR210 (min) VS C=C ratio (%)
with and without 5 phr of XT100
Tgel (min)
8,0
7,0
6,0
5,0
4,0
3,0
2,0
1,0
0,0
14,00
13,00
12,00
11,00
10,00
9,00
8,00
7,00
6,00
70/30
50/50
30/70
Blend ratio (CN1964CG/SR210)
Tgel (0 phr)
Tgel (5 phr)
C=C


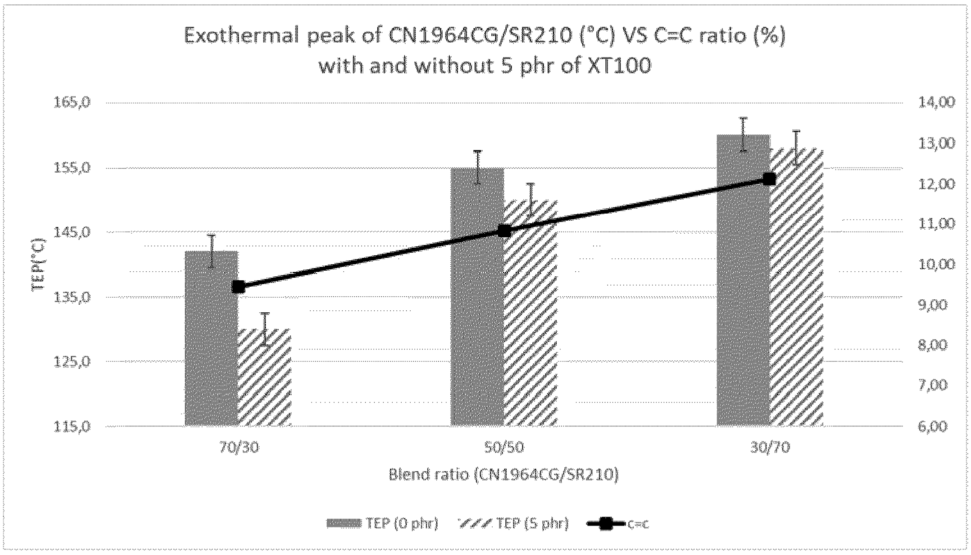

Exothermal peak of CN1964CG/SR210 (°C) VS C=C ratio (%)
with and without 5 phr of XT100
TEP(°C)
165,0
155,0
145,0
135,0
125,0
115,0
14,00
13,00
12,00
11,00
10,00
9,00
8,00
7,00
6,00
70/30
50/50
30/70
Blend ratio (CN1964CG/SR210)
TEP (0 phr)
TEP (5 phr)
C=C


FIGURE 2

| | |
|---|---|
| 4a | 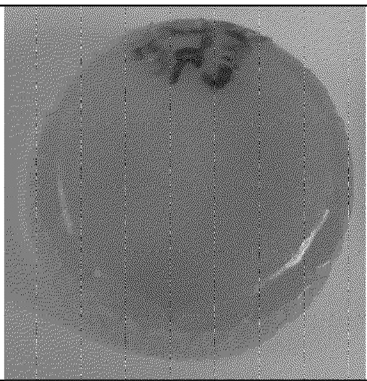 |
| Comp 4 | 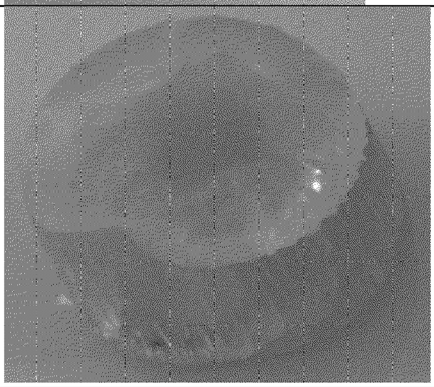 |
| Comp 9 | 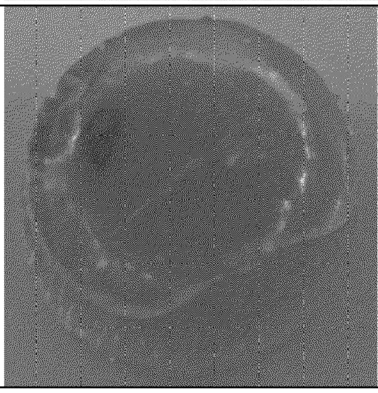 |

| | |
|---|---|
| Comp 10 | 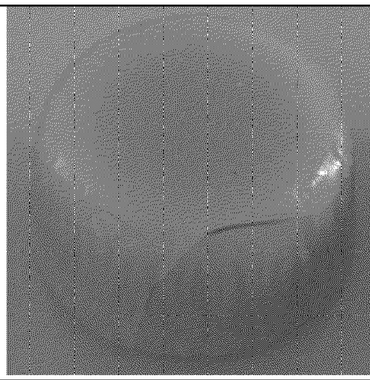 |
| Comp 11 | 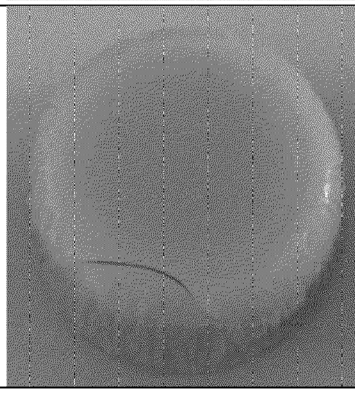 |

**FIGURE 3**

Europäisches Patentamt
European Patent Office
Office européen des brevets

# EUROPEAN SEARCH REPORT

Application Number
EP 19 30 6704

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/038634 A1 (SUN BENJAMIN JIEMIN [US] ET AL) 5 February 2015 (2015-02-05)<br>* claims; example 17 *<br>----- | 1-20 | INV.<br>C08F279/06<br>C08F285/00<br>C08L33/04<br>C04B26/06 |
| A | EP 0 894 828 A1 (MITSUBISHI RAYON CO [JP]) 3 February 1999 (1999-02-03)<br>* claims; examples P7, 7, 22 *<br>----- | 1-21 | |
| A | WO 2018/194292 A1 (LG HAUSYS LTD [KR]) 25 October 2018 (2018-10-25)<br>* claims; examples *<br>& EP 3 613 714 A1 (LG HAUSYS LTD [KR]) 26 February 2020 (2020-02-26)<br>----- | 1-21 | |

TECHNICAL FIELDS SEARCHED (IPC)

C09J
C08F
C08L
C04B

The present search report has been drawn up for all claims

1

| Place of search | Date of completion of the search | Examiner |
|---|---|---|
| Munich | 28 May 2020 | Degrendel, Magali |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 19 30 6704

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2020

| Patent document cited in search report | Publication date | Patent family member(s) | Publication date |
|---|---|---|---|
| US 2015038634 A1 | 05-02-2015 | CA 2919711 A1 | 05-02-2015 |
| | | CN 105722494 A | 29-06-2016 |
| | | EP 3027165 A1 | 08-06-2016 |
| | | HK 1221173 A1 | 26-05-2017 |
| | | JP 6197116 B2 | 13-09-2017 |
| | | JP 2016527269 A | 08-09-2016 |
| | | US 2015038634 A1 | 05-02-2015 |
| | | WO 2015017556 A1 | 05-02-2015 |
| EP 0894828 A1 | 03-02-1999 | CN 1216561 A | 12-05-1999 |
| | | DE 69709629 D1 | 21-02-2002 |
| | | DE 69709629 T2 | 19-09-2002 |
| | | EP 0894828 A1 | 03-02-1999 |
| | | ES 2170382 T3 | 01-08-2002 |
| | | HK 1019154 A1 | 28-05-2004 |
| | | KR 20000005550 A | 25-01-2000 |
| | | TW 409112 B | 21-10-2000 |
| | | US 6323259 B1 | 27-11-2001 |
| | | WO 9740098 A1 | 30-10-1997 |
| WO 2018194292 A1 | 25-10-2018 | EP 3613714 A1 | 26-02-2020 |
| | | KR 20180116982 A | 26-10-2018 |
| | | WO 2018194292 A1 | 25-10-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *CHEMICAL ABSTRACTS,* 109-17-1, 2082-81-7, 97-90-5, 109-16-0, 6606-59-3, 3290-92-4, 72869-86-4, 36425-15-7, 94-36-0, 78-40-0, 614-45-9
- OCDE (1996), Test No. 118: Determination of the Number-Average Molecular Weight and the Molecular Weight Distribution of Polymers using Gel Permeation Chromatography. OECD Guidelines for the Testing of Chemicals. 1996